# EUROPEAN PATENT APPLICATION

(11) **EP 4 270 226 A1**
(43) Date of publication of application: **01.11.2023**
(21) Application number: 21922420.1
(22) Date of filing: 29.10.2021
(51) Int. Cl.: G06F 21/46, G06F 21/60, G06F 21/64, G06F 16/27

(54) **IDENTITY INFORMATION PROCESSING METHOD, DEVICE, AND SYSTEM**

(30) Priority: 26.01.2021 CN 202110106249
(71) Applicant: Huawei Cloud Computing Technologies Co., Ltd., Guizhou 550025 (CN)
(72) Inventor: XUE, Tengfei, Shenzhen, Guangdong 518129 (CN); ZHOU, Mengmeng, Shenzhen, Guangdong 518129 (CN); ZHANG, Ziyi, Shenzhen, Guangdong 518129 (CN); YU, Yue, Shenzhen, Guangdong 518129 (CN)
(74) Representative: Gill Jennings & Every LLP
(86) International application number: PCT/CN2021/127425
(87) International publication number: WO 2022/160829

(57) **Abstract**

This application relates to an identity information processing method, a device, and a system. The method includes: A terminal device obtains, from a credential issuing device, a first encrypted information set and a first credential information set that correspond to a plurality of pieces of first user information, where the first encrypted information set includes a plurality of pieces of first encrypted information obtained after encryption is correspondingly performed on the plurality of pieces of first user information, and the first credential information set includes a plurality of pieces of first credential information obtained after issuing processing is performed on the plurality of pieces of first user information; the terminal device determines, based on the first encrypted information set and the first credential information set in a first set, target credential information and target user information that correspond to target user information of a user as a target verification set; and the terminal device provides the target verification set for a credential verification device. According to this application, the user can participate in customization of a digital credential that matches a specific scenario.

## Description

This application claims priority to Chinese Patent Application No. 202110106249.0, filed with the China National Intellectual Property Administration on January 26, 2021 and entitled "IDENTITY INFORMATION PROCESSING METHOD, DEVICE, AND SYSTEM", which is incorporated herein by reference in its entirety.

### TECHNICAL FIELD

This application relates to the field of computer technologies, and in particular, to an identity information processing method, a device, and a system.

### BACKGROUND

A digital identity is identification of an entity (for example, a user or an item) through data. Especially for the user, emergence of the digital identity profoundly changes momentum and a manner of economic and social development. Compared with a conventional identity, the digital identity greatly improves social efficiency and maximizes a user value, so that a government agency, a service provider, the user, and another party can benefit from the digital identity.

Currently, in a related technology, verification may be performed on digital identity information of the user by using a centralized identity information verification system. In the system, when the user meets an issuing condition, an identity provider (Identity Provider, IDP) generates, based on user information, a digital credential matching the user, and distributes the digital credential to the user. When the service provider needs to perform verification on an identity of the user, the service provider can apply to the IDP to perform verification on the digital credential. During implementation, a part of the user information corresponding to the digital credential obtained by the service provider may be private to the user (for example, marriage and education statuses), and is not expected to be exposed to an irrelevant person.

### SUMMARY

In view of this, an identity information processing method, a device, and a system are provided, so that a user can participate in customizing a digital credential that matches a specific scenario, thereby avoiding privacy disclosure.

According to a first aspect, an embodiment of this application provides an identity information processing method. The method includes: A terminal device obtains, from a credential issuing device, a first set corresponding to a plurality of pieces of first user information, where the first set includes a first encrypted information set and a first credential information set, the first encrypted information set includes a plurality of pieces of first encrypted information obtained after encryption is correspondingly performed on the plurality of pieces of first user information, and the first credential information set includes a plurality of pieces of first credential information obtained after issuing processing is performed on the plurality of pieces of first user information; the terminal device determines, based on the first encrypted information set and the first credential information set in the first set, a target verification set corresponding to target user information of a user, where the target verification set includes target user information in the plurality of pieces of first user information and target credential information that corresponds to the target user information and that is in the plurality of pieces of first credential information; and the terminal device provides the target verification set for a credential verification device.

In a related technology, a digital credential of a decentralized identity information verification system is usually claims for a plurality of pieces of identity information provided by each digital identity, is encrypted as a whole, cannot be issued separately for each piece of identity information, and a user cannot process the data credential, for example, selecting only some attribute claims in the digital credential, which limits a usage scenario of the user. In addition, the digital credential needs to be stored by the user and is easy to lose.

Based on the foregoing case, after obtaining the first set from the credential issuing device, the terminal device generates the target verification set by using a part of the information in the first set. This not only enables the terminal device to participate in customization of the target verification set, but also enables the target verification set to correspond to an actual requirement, thereby effectively protecting user privacy.

In a possible implementation of the first aspect, that a terminal device obtains, from a credential issuing device, a first set corresponding to a plurality of pieces of first user information includes: The terminal device obtains, by using a first blockchain node corresponding to the terminal device, the first set provided by a second blockchain node corresponding to the credential issuing device.

In a related technology, after separately generating respective decentralized identity information, decentralized identity systems may encrypt/decrypt by using public and private keys between each other, and a blockchain technology itself is decentralized and information of the blockchain technology cannot be tampered with. Therefore, in this embodiment of this application, related data of each terminal may be processed and related data may be stored by using the blockchain technology.

In a possible implementation of the first aspect, that a terminal device obtains, from a credential issuing device, a first set corresponding to a plurality of pieces of first user information includes: The terminal device initiates a data request; and the credential issuing device obtains the first set from local or cloud storage to respond to the data request initiated by the terminal device.

During implementation, many terminals on the decentralized identity system may not use the blockchain technology because the obtained data (the first set) may be stored on a non-blockchain node, for example, a cloud storage. This may be applicable to more terminal devices.

In a possible implementation of the first aspect, the method further includes: The terminal device obtains a second set corresponding to a plurality of pieces of second user information, where the second set includes a second encrypted information set and a second credential information set, the second encrypted information set includes a plurality of pieces of second encrypted information obtained after encryption is correspondingly performed on the plurality of pieces of second user information, and the second credential information set includes a plurality of pieces of second credential information obtained after issuing processing is performed on the plurality of pieces of second user information.

During implementation, the terminal device may obtain more sets in addition to the first set, so that a suitable set is subsequently selected based on a service requirement.

In a possible implementation of the first aspect, the method further includes: The terminal device determines, based on the second encrypted information set and the second credential information set in the second set, the target verification set corresponding to the target user information of the user, where the target verification set includes the target user information and target credential information corresponding to the target user information, and the target verification set includes target user information in the plurality of pieces of second user information and target credential information that corresponds to the target user information and that is in the plurality of pieces of second credential information.

After obtaining the first set/second set sent by the credential issuing device, the terminal device may select a part or all of the first user information or the second user information and provide the part or all of the first user information or the second user information for the credential verification terminal based on a requirement, which not only improves security, but also can adapt to more service scenarios.

In a possible implementation of the first aspect, that the terminal device determines, based on the first encrypted information set and the first credential information set in the first set, a target verification set corresponding to target user information of a user includes: The terminal device determines, based on the first encrypted information set and the first credential information set in the first set and the second encrypted information set and the second credential information set in the second set, the target verification set corresponding to the target user information of the user, where the target verification set includes the target user information in the plurality of pieces of first user information, target user information in the plurality of pieces of second user information, the target credential information that corresponds to the target user information and that is in the plurality of pieces of first credential information, and target credential information that corresponds to the target user information and that is in the plurality of pieces of second credential information.

During implementation, after obtaining the first set and the second set that are sent by the credential issuing device, the terminal device may select a part of the first user information and the second user information as credential content of the digital credential based on a requirement. This not only improves security, but also can adapt to more service scenarios.

In a possible implementation of the first aspect, the first set further includes first signature information obtained after the credential issuing device performs collective signing on the plurality of pieces of first credential information.

During implementation, the credential issuing terminal may include the first signature information in the first set to enable the credential verification terminal to perform verification on a verification subject.

In a possible implementation of the first aspect, after the terminal device provides the target verification set for the credential verification device, the method further includes: The terminal device provides the first credential information set and the first signature information for the credential verification device.

According to the manner, the credential verification terminal may perform a signature verification operation on the first signature information by using the first credential information set, to determine whether the credential issuing device of the first credential information set is a target credential issuing device.

According to a second aspect, an embodiment of this application provides an identity information processing method. The method includes: A credential verification device receives a service request; the credential verification device obtains a target verification set from a terminal device, where the target verification set includes target user information and target credential information that correspond to a service; and the credential verification device performs verification on the target verification set, and provides credential verification information for the terminal device, where the credential verification information indicates whether the verification on the target verification set succeeds.

According to the manner, the credential verification device may obtain only credential content on which verification needs to be performed, and perform verification on the credential content. This not only effectively avoids disclosure of user information, but also reduces workload of the credential verification terminal.

In a possible implementation of the second aspect, the method further includes: The credential verification device obtains a first credential information set and first signature information from the terminal device, where the first credential information set includes a plurality of pieces of first credential information, and the first signature information is information obtained after collective signing is performed on the plurality of pieces of first credential information.

During implementation, the credential verification device may perform a signature verification operation on the first signature information by using the first credential information set, to determine whether the credential issuing device of the first credential information set is a target credential issuing device.

According to a third aspect, an embodiment of this application provides a terminal device. The terminal device includes: a set obtaining unit, configured to obtain, from a credential issuing device, a first set corresponding to a plurality of pieces of first user information, where the first set includes a first encrypted information set and a first credential information set, the first encrypted information set includes a plurality of pieces of first encrypted information obtained after encryption is correspondingly performed on the plurality of pieces of first user information, and the first credential information set includes a plurality of pieces of first credential information obtained after issuing processing is performed on the plurality of pieces of first user information; a target verification set determining unit, configured to determine, based on the first encrypted information set and the first credential information set in the first set, a target verification set corresponding to target user information of a user, where the target verification set includes target user information in the plurality of pieces of first user information and target credential information that corresponds to the target user information and that is in the plurality of pieces of first credential information; and a target verification set providing unit, configured to provide the target verification set for a credential verification device.

In a possible implementation of the third aspect, the set obtaining unit is further configured to obtain a second set corresponding to a plurality of pieces of second user information, where the second set includes a second encrypted information set and a second credential information set, the second encrypted information set includes a plurality of pieces of second encrypted information obtained after encryption is correspondingly performed on the plurality of pieces of second user information, and the second credential information set includes a plurality of pieces of second credential information obtained after issuing processing is performed on the plurality of pieces of second user information.

In a possible implementation of the third aspect, the verification set determining unit is further configured to determine, based on the second encrypted information set and the second credential information set in the second set, the target verification set corresponding to the target user information of the user, where the target verification set includes the target user information and target credential information corresponding to the target user information, and the target verification set includes target user information in the plurality of pieces of second user information and target credential information that corresponds to the target user information and that is in the plurality of pieces of second credential information.

In a possible implementation of the third aspect, the verification set determining unit is further configured to determine, based on the first encrypted information set and the first credential information set in the first set and the second encrypted information set and the second credential information set in the second set, the target verification set corresponding to the target user information of the user, where the target verification set includes the target user information in the plurality of pieces of first user information, target user information in the plurality of pieces of second user information, the target credential information that corresponds to the target user information and that is in the plurality of pieces of first credential information, and target credential information that corresponds to the target user information and that is in the plurality of pieces of second credential information.

According to a fourth aspect, an embodiment of this application provides a credential verification device. The credential verification device includes: a receiving unit, configured to receive a service request; a target verification set obtaining unit, configured to obtain a target verification set from a terminal device, where the target verification set includes target user information and target credential information that correspond to a service; and a credential verification information providing unit, configured to: perform verification on the target verification set, and provide credential verification information for the terminal device, where the credential verification information indicates whether the verification on the target verification set succeeds.

According to a fourth aspect, an embodiment of this application provides an identity information verification device. The identity information verification device includes a processor; and a memory configured to store processor-executable instructions, where the processor is configured to implement the method according to any one of the possible implementations of the first aspect or the method according to any one of the possible implementations of the first aspect when executing the instructions.

According to a fifth aspect, an embodiment of this application provides a non-volatile computer-readable storage medium, where the non-volatile computer-readable storage medium stores computer program instructions, and when the computer program instructions are executed by a processor, the method according to any one of the possible implementations of the first aspect or the method according to any one of the possible implementations of the first aspect is implemented.

According to a sixth aspect, an embodiment of this application provides a computer program product, where the computer program product includes instructions, and the instructions instruct a server to perform the steps in the method according to any one of the possible implementations of the first aspect or the steps in the method according to any one of the possible implementations of the first aspect.

According to a seventh aspect, an embodiment of this application provides an identity information processing method. The method is performed by a terminal device of a user, and the method includes: obtaining, from a credential issuing device, a first set generated by using a plurality of pieces of first user information, where the first set includes a first encrypted information set, a first credential information set, and first signature information, the first encrypted information set includes a plurality of pieces of first encrypted information that encrypts the plurality of pieces of first user information by using a first public key, the first credential information set includes a plurality of pieces of first credential information obtained after blind processing is performed on the plurality of pieces of first user information, and the first signature information is information obtained after collective signing is performed on the plurality of pieces of first credential information; generating, by using the first set, a target verification set corresponding to target user information, where the target user information indicates information requested by a credential verification device; and providing the target verification set for the credential verification device.

In a related technology, a digital credential of a decentralized identity information verification system is usually claims for a plurality of pieces of identity information provided by each digital identity, is encrypted as a whole, cannot be issued separately for each piece of identity information, and a user cannot process the data credential, for example, selecting only some attribute claims in the digital credential, which limits a usage scenario of the user. In addition, the digital credential needs to be stored by the user and is easy to lose.

Based on the foregoing case, according to the method, in a case in which the credential issuing device issues all identity information as a whole, the blind processing may separately be performed on each piece of identity information, to ensure that the first set meets an issuing requirement in terms of an issuing subject and issued content. Then, after obtaining the first set from the credential issuing device, the terminal device participates in customization of the target verification set corresponding to the target user information, so that the terminal user can participate in generation of the digital credential based on an actual requirement.

In a possible implementation of the seventh aspect, the obtaining, from a credential issuing device, a first set generated by using a plurality of pieces of first user information includes: obtaining, by using a first blockchain node corresponding to the terminal device, the first set provided by a second blockchain node corresponding to the credential issuing device.

In a related technology, after separately generating respective decentralized identity information, decentralized identity systems may encrypt/decrypt by using public and private keys between each other, and a blockchain technology itself is decentralized and information of the blockchain technology cannot be tampered with. Therefore, in this embodiment of this application, by using the blockchain technology, related data of each terminal may be processed and stored on a blockchain node corresponding to each terminal.

In a possible implementation of the seventh aspect, the obtaining, from a credential issuing device, a first set generated by using a plurality of pieces of first user information includes: sending a data request for the first set to an issuing end storage unit corresponding to the credential issuing device; and receiving the first set from the issuing end storage unit.

During implementation, many terminals on the decentralized identity system may not use the blockchain technology because the obtained data (the first set) may be stored on a non-blockchain node, for example, a cloud storage. This may be applicable to more terminal devices.

In a possible implementation of the seventh aspect, the generating, by using the first set, a target verification set corresponding to target user information includes: decrypting the plurality of first encrypted credentials by using a first private key corresponding to the first public key, to obtain the plurality of pieces of first user information; determining the target user information by using the plurality of pieces of first user information; determining, by using a correspondence between the plurality pieces of first user information and the plurality pieces of first credential information, target credential information corresponding to the target user information; and determining the target user information and the target credential information as the target verification set.

During implementation, the terminal device may select, from the plurality of pieces of first user information based on the target user information, first credential information corresponding to the target user information, thereby generating the target credential information corresponding only to the target user information. In this embodiment, initiative of the terminal device may be used to avoid disclosing irrelevant information.

In a possible implementation of the seventh aspect, after generating, by using the first set, the target verification set corresponding to the target user information, the method further includes: obtaining a plurality of pieces of second user information corresponding to the user; and obtaining a second set generated by using the plurality of pieces of second user information, where the second set includes a second encrypted information set, a second credential information set, and second signature information, the second encrypted information set includes a plurality of pieces of second encrypted information that encrypts the plurality of pieces of second user information by using a third public key, the second credential information set includes a plurality of pieces of second credential information obtained after the blind processing is performed on the plurality of pieces of second user information, and the second signature information is information obtained after the collective signing is performed on the plurality of pieces of second credential information.

During implementation, the terminal device may further obtain the second set generated by the credential issuing device based on the plurality of pieces of second user information. In other words, for the plurality of pieces of second user information, according to the method, in a case in which the credential issuing device issues all identity information as a whole, the blind processing may separately be performed on each piece of identity information, to ensure that the first set meets an issuing requirement in terms of an issuing subject and issued content. Then, after obtaining the second set from the credential issuing device, the terminal device participates in customization of a second verification set corresponding to the target user information.

During implementation, the credential issuing device that collectively issues the plurality of pieces of second user information may be a same issuing end as the credential issuing device that collectively issues the plurality of pieces of first user information, or may be a different issuing end, which greatly increases a usage scenario of the terminal device.

In a possible implementation of the seventh aspect, the generating, by using the first set, a target verification set corresponding to target user information includes: decrypting the plurality of first encrypted credentials by using a first private key corresponding to the first public key or decrypting the plurality of second encrypted credentials by using a third private key corresponding to the third public key, to obtain the plurality of pieces of first user information or the plurality of pieces of second user information; determining the target user information by using the plurality of pieces of first user information or the plurality of pieces of second user information; determining, by using a correspondence between the plurality pieces of first user information and the plurality pieces of first credential information or by using a correspondence between the plurality pieces of second user information and the plurality pieces of second credential information, target credential information corresponding to the target user information; and determining the target user information and the target credential information as the target verification set.

During implementation, after obtaining the first set/second set sent by the credential issuing device, the terminal device may select a part or all of the first user information or the second user information and provide the part or all of the first user information or the second user information for the credential verification terminal based on a requirement, which not only improves security, but also can adapt to more service scenarios.

In a possible implementation of the seventh aspect, the generating, by using the first set, a target verification set corresponding to target user information includes: decrypting the plurality of first encrypted credentials by using a first private key corresponding to the first public key and decrypting the plurality of second encrypted credentials by using a third private key corresponding to the third public key, to obtain the plurality of pieces of first user information and the plurality of pieces of second user information; determining the target user information by using the plurality of pieces of first user information and the plurality of pieces of second user information; determining, by using a correspondence between the plurality pieces of first user information and the plurality pieces of first credential information, and by using a correspondence between the plurality pieces of second user information and the plurality pieces of second credential information, target credential information corresponding to the target user information; and determining the target user information and the target credential information as the target verification set.

During implementation, after obtaining the first set/the second set sent by the credential issuing device, the terminal device may select a part of the first user information and the second user information as credential content of the digital credential based on a requirement. This not only improves security, but also can adapt to more service scenarios.

In a possible implementation of the seventh aspect, the method further includes: encrypting the target verification set by using a second public key provided by the credential issuing device, to generate the encrypted target verification set; and determining the encrypted target verification set, the first credential information set, and the first signature information as a target credential set.

The public and private key system is used to encrypt the content issued by the credential issuing device, to improve confidentiality. Further, to ensure that the credential verification device performs verification, the target credential set may be determined by using the encrypted target verification set, the first credential information set, and the first signature information.

In a possible implementation of the seventh aspect, the method further includes: encrypting the plurality of pieces of first user information, and storing the encrypted plurality of pieces of user information on the first blockchain node.

During implementation, the blockchain technology is used to store the user information, which not only ensures data validity, but also avoids a large quantity of verification operations.

In a possible implementation of the seventh aspect, the method further includes: invoking a first smart contract of the first blockchain node, and sending a credential issuing request to the second blockchain node corresponding to the credential issuing device.

During implementation, various operations may be completed by using the smart contract in the blockchain technology, and a large amount of signature information does not need to be stored in an identity document, thereby reducing a large quantity of verification operations.

In a possible implementation of the seventh aspect, the method further includes: storing the target credential set in the first blockchain node, so that a third blockchain node corresponding to the credential verification device obtains the target credential set from the first blockchain node.

During implementation, the blockchain technology is used to store the user information, which not only ensures data validity, but also avoids a large quantity of verification operations.

According to an eighth aspect, an embodiment of this application provides an identity information processing method. The method is performed by a credential verification device, and the method includes: in response to a service request received from a terminal device of a user, obtaining, from the terminal device, a target credential set corresponding to target user information in the service request, where the target credential set includes an encrypted target verification set, a first credential information set, and first signature information, a target verification set includes target user information and target credential information, the encrypted target verification set includes a set obtained after encryption is performed on the target verification set by using a second public key, the first credential information set includes a plurality of pieces of first encrypted information that encrypts a plurality of pieces of user information of the user by using a first public key, and the first signature information is information obtained after collective signing is performed on the plurality of pieces of first credential information; and providing credential verification information for the terminal device.

During implementation, the credential verification device may only perform verification on the target credential set sent by the terminal device. The target credential set includes not only information (the information of a credential issuing device that performs the collective signing on the plurality of pieces of first credential information and a plurality of pieces of first encrypted information that encrypts a plurality of pieces of first user information) of the credential issuing device and information (the target verification set) used to perform verification on credential content, thereby meeting a verification requirement of the credential verification device.

In a possible implementation of the eighth aspect, the method further includes: determining the credential verification information for the user based on the target credential set.

During implementation, the credential verification device may implement a credential verification operation on the user based on the target credential set mentioned above, to determine the credential verification information.

In a possible implementation of the eighth aspect, the credential verification information includes determining that the credential issuing device is a target credential issuing device and that credential information obtained based on the target credential set matches the target credential information.

During implementation, the credential verification information may include verification results of the credential issuing device and credential issuing content.

In a possible implementation of the eighth aspect, the determining the credential verification information for the user based on the target credential set includes: performing a signature verification operation on the first signature information by using the first credential information set, and determining whether the credential issuing device of the first credential information set is a target credential issuing device; decrypting the encrypted target verification set by using a second private key corresponding to the second public key, to obtain the target user information and the target credential information; and determining that credential information generated by using the target user information matches the target credential information.

During implementation, the method may include specific verification operations on the credential issuing device and credential issuing content.

In a possible implementation of the eighth aspect, the providing credential verification information for the terminal device includes: encrypting the credential verification information, storing the encrypted credential verification information in a third blockchain node, and sending the encrypted credential verification information to a first blockchain node of the user by using the third blockchain node; or encrypting the credential verification information, storing the encrypted credential verification information in a verification end storage unit of the credential verification device, and sending the encrypted credential verification information to the terminal device of the user.

During implementation, a blockchain technology can be used to create, publish, update, and query a decentralized digital identity, and based on this, an on-chain storage function can be implemented.

According to a ninth aspect, an embodiment of this application provides an identity information processing method. The method is performed by a credential issuing device, and the method includes: generating a first set by using a plurality of pieces of first user information, where the first set includes a first encrypted information set, a first credential information set, and first signature information, the first encrypted information set includes a plurality of pieces of first encrypted information that encrypts the plurality of pieces of user information by using a first public key, the first credential information set includes a plurality of pieces of first credential information obtained after blind processing is performed on the plurality of pieces of user information, and the first signature information is information obtained after collective signing is performed on the plurality of pieces of first credential information; and providing the first set for a terminal device.

According to the method, in a case in which the credential issuing device issues all identity information as a whole, the blind processing may separately be performed on each piece of identity information, to ensure that the first set meets an issuing requirement in terms of an issuing subject and issued content. In addition, the credential issuing device is unaware of use of a digital credential, which further improves security.

In a possible implementation of the ninth aspect, the method further includes: obtaining a plurality of pieces of user information from a first blockchain node corresponding to a user, where the plurality of pieces of user information is related to the plurality of pieces of first user information.

In a related technology, after separately generating respective decentralized identity information, decentralized identity systems may encrypt/decrypt by using public and private keys between each other, and a blockchain technology itself is decentralized and information of the blockchain technology cannot be tampered with. Therefore, in this embodiment of this application, by using the blockchain technology, related data of each terminal may be processed and stored on a blockchain node corresponding to each terminal.

In a possible implementation of the ninth aspect, the providing the first set for a terminal device includes: encrypting the first set, and storing the encrypted first set in a second blockchain node corresponding to the credential issuing device; or storing the encrypted first set in an issuing end storage unit corresponding to the credential issuing device, so that the terminal device can obtain the first set.

During implementation, the credential issuing device may select on-chain storage or off-chain storage based on an actual requirement.

According to a tenth aspect, an embodiment of this application provides an identity information verification device. The device includes: a user information obtaining unit, configured to identify and obtain a plurality of pieces of first user information corresponding to a user; a set obtaining unit, configured to obtain, from a credential issuing device, a first set generated by using the plurality of pieces of first user information, where the first set includes a first encrypted information set, a first credential information set, and first signature information, the first encrypted information set includes a plurality of pieces of first encrypted information that encrypts the plurality of pieces of first user information by using a first public key, the first credential information set includes a plurality of pieces of first credential information obtained after blind processing is performed on the plurality of pieces of first user information, and the first signature information is information obtained after collective signing is performed on the plurality of pieces of first credential information; a verification set generation set, configured to generate, by using the first set, a target verification set corresponding to target user information, where the target user information indicates information requested by a credential verification device; and a verification set providing unit, configured to provide the target verification set for the credential verification device.

According to an eleventh aspect, an embodiment of this application provides an identity information verification device. The identity information processing device includes: a credential set obtaining unit, configured to: in response to a service request received from a terminal device of a user, obtain, from the terminal device, a target credential set corresponding to target user information in the service request, where the target credential set includes an encrypted target verification set, a first credential information set, and first signature information, a target verification set includes target user information and target credential information, the encrypted target verification set includes a set obtained after encryption is performed on the target verification set by using a second public key, the first credential information set includes a plurality of pieces of first encrypted information that encrypts a plurality of pieces of user information of the user by using a first public key, and the first signature information is information obtained after collective signing is performed on the plurality of pieces of first credential information; and a credential verification information providing unit, configured to provide credential verification information for the terminal device.

According to a twelfth aspect, an embodiment of this application provides an identity information verification device. The identity information processing device includes: a user information obtaining unit, configured to obtain, from a terminal device of a user, a plurality of pieces of user information corresponding to the user; a set generation unit, configured to generate a first set by using the plurality of pieces of user information, where the first set includes a first encrypted information set, a first credential information set, and first signature information, the first encrypted information set includes a plurality of pieces of first encrypted information that encrypts the plurality of pieces of user information by using a first public key, the first credential information set includes a plurality of pieces of first credential information obtained after blind processing is performed on the plurality of pieces of user information, and the first signature information is information obtained after collective signing is performed on the plurality of pieces of first credential information; and providing the first set for the terminal device.

According to a thirteenth aspect, an embodiment of this application provides an identity information verification device. The identity information verification device includes a processor; and a memory configured to store processor-executable instructions, where the processor is configured to implement the method according to the seventh aspect and the possible implementations of the seventh aspect, the method according to the eighth aspect and the possible implementations of the eighth aspect, or the method according to the ninth aspect and the possible implementations of the ninth aspect when executing the instructions.

According to a fourteenth aspect, an embodiment of this application provides a non-volatile computer-readable storage medium, where the non-volatile computer-readable storage medium stores computer program instructions, and when the computer program instructions are executed by a processor, the method according to the seventh aspect and the possible implementations of the seventh aspect, the method according to the eighth aspect and the possible implementations of the eighth aspect, or the method according to the ninth aspect and the possible implementations of the ninth aspect is implemented.

According to a fifteenth aspect, an embodiment of this application provides a computer program product, where the computer program product includes instructions, and the instructions instruct a server to perform the steps in the method according to the seventh aspect and the possible implementations of the seventh aspect, the steps in the method according to the eighth aspect and the possible implementations of the eighth aspect, or the steps in the method according to the ninth aspect and the possible implementations of the ninth aspect

These aspects and other aspects of this application are more concise and easier to understand in descriptions of the following (a plurality of) embodiments.

### BRIEF DESCRIPTION OF DRAWINGS

Accompanying drawings included in this specification and constituting a part of this specification and this specification jointly show example embodiments, features, and aspects of this application, and are intended to explain principles of this application.
FIG. 1 is a diagram of a centralized identity information verification system according to a related technology;
FIG. 2 is a diagram of a decentralized identity information verification system according to a related technology;
FIG. 3A and FIG. 3B are a diagram of service processing of an identity information processing system according to an embodiment of this application;
FIG. 4 is a diagram of a scenario of a blockchain-based decentralized identity information verification system according to an embodiment of this application;
FIG. 5 is a schematic diagram of a structure of a blockchain node according to an embodiment of this application;
FIG. 6 is a diagram of a system architecture of a blockchain-based identity information processing system according to an embodiment of this application;
FIG. 7 is a flowchart of a processing procedure of a blockchain-based identity information processing system according to an embodiment of this application;
FIG. 8 is a block diagram of an identity information processing device according to an embodiment of this application;
FIG. 9 is a block diagram of an identity information processing device according to an embodiment of this application;
FIG. 10 is a block diagram of an identity information processing device according to an embodiment of this application; and
FIG. 11 is a block diagram of a computing device according to an embodiment of this application.

### DESCRIPTION OF EMBODIMENTS

The following describes various example embodiments, features, and aspects of this application in detail with reference to accompanying drawings. Identical reference numerals in the accompanying drawings indicate elements that have same or similar functions. Although various aspects of embodiments are shown in the accompanying drawings, the accompanying drawings are not necessarily drawn in proportion unless otherwise specified.

In embodiments of this application, "/" may indicate an "or" relationship between associated objects. For example, A/B may indicate A or B. "And/or" may be used to describe three relationships between associated objects. For example, A and/or B may indicate the following three cases: Only A exists, both A and B exist, and only B exists, where A and B may be singular or plural. To facilitate description of the technical solutions in embodiments of this application, in embodiments of this application, terms such as "first" and "second" may be used to distinguish between technical features having same or similar functions. The terms such as "first" and "second" do not limit a quantity and an execution sequence, and the terms such as "first" and "second" do not indicate a definite difference. In embodiments of this application, a term such as "example" or "for example" is used to indicate an example, an illustration, or a description. Any embodiment or design scheme described as an "example" or "for example" should not be explained as being more preferred or having more advantages than another embodiment or design scheme. Use of the term such as "example" or "for example" is intended to present a relative concept in a specific manner for ease of understanding.

In addition, to better describe this application, specific details are given in the following specific implementations. A person skilled in the art should understand that this application can also be implemented without some specific details. In some embodiments, methods, means, elements, and circuits that are well-known to a person skilled in the art are not described in detail, so that a main purpose of this application is highlighted.

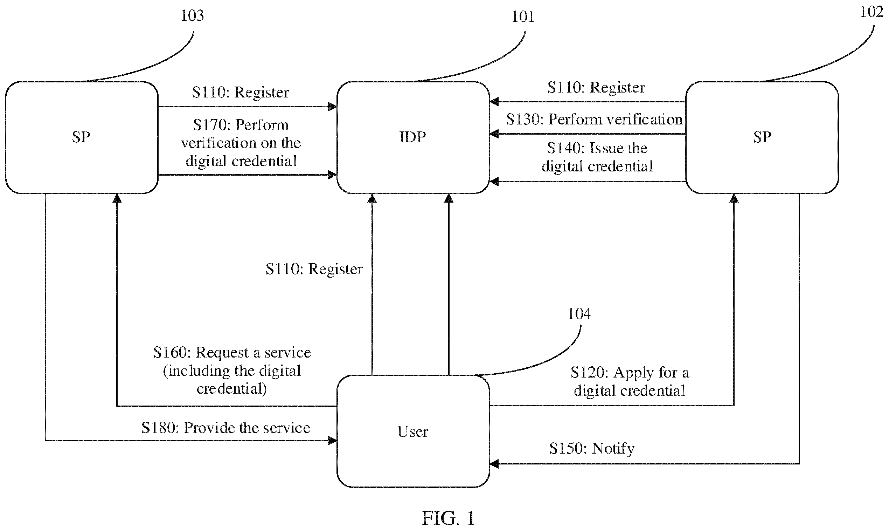

To better understand the example embodiments of this application, the following describes a centralized identity information verification system according to a related technology with reference to FIG. 1. As shown in FIG. 1, the centralized identity information verification system includes an IDP 101, a service provider (service provider, SP) 102 and a service provider 103, and a user 104. The IDP 101 may provide identity services for the SPs 102 and 103 and the user 104. For example, the IDP 101 may generate a digital credential for the user based on identity-related user information, and the user information may include information such as an age, an education background, and an occupation.

The SPs 102 and 103 are providers of services that may include related services in various fields such as education, healthcare, banking, transportation, and shopping. As shown in FIG. 1, the SP 102 may issue the digital credential to the IDP for the user 104, and thus the SP 102 is a credential issuing device. The SP 103, in turn, performs verification on the digital credential issued by the SP 102 for the user 104, and thus the SP 103 is a credential verification device.

As shown in FIG. 1, step S110: The user 104, the SP 102, and the SP 103 may respectively perform registration with the IDP 101. For example, the user 104, the SP 102, and the SP 103 may provide respective user information for the IDP 101 at different time points to complete the registration operation.

Step S120: The user 104 applies for the digital credential with the SP 102. After receiving the application, the SP 102 issues the digital credential to the user 101 and sends the digital credential to the IDP 101. Step S130: The IDP 101 performs verification on the identity of the SP 102, and after the verification succeeds, step S140: The IDP 101 receives the digital credential issued through the SP 102. After receiving the digital credential, the IDP 101 may provide the digital credential for the user 104, and step S150: The SP 102 may prompt the user 104 that the digital credential has been sent to the user 104.

Step S160: The user 104 may request a service from the SP 103 by using the digital credential. After receiving the request, the SP 103 obtains the digital credential from the IDP 101 or the user 104, and step S170: The SP 103 performs verification on the digital credential. After the verification succeeds, step S180: The SP 103 provides the service for the user.

It can be learned that the SPs 102 and 103 and the user 104 in the centralized identity information verification system shown in FIG. 1 all depend on the IDP 101 for verification operations on the identities and the credential. In other words, the SPs 102 and 103 and the user 104 in the centralized identity information verification system cannot complete the identity verification and content interpretation without the IDP 101. In addition, all user information used to generate the digital credential is displayed after the verification succeeds, and privacy is excessively disclosed. Further, the digital credential in the centralized identity information verification system has poor portability, and cannot be directly applied to another system.

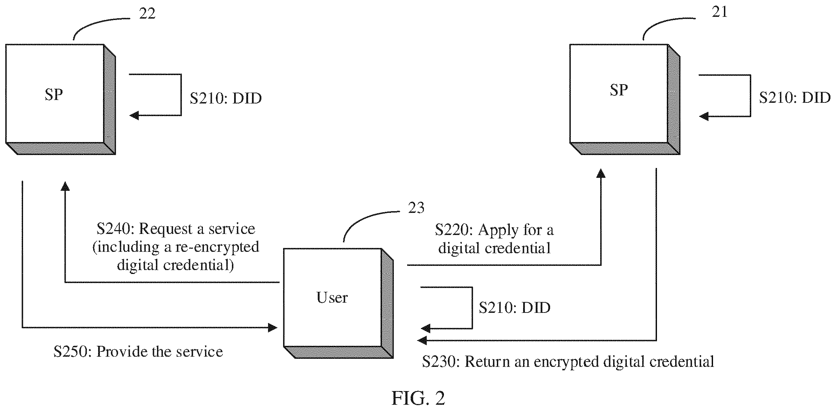

In view of the foregoing considerations, a digital credential management system provided in the example embodiments of this application uses a decentralized identity information verification system. To better describe the decentralized identity information verification system, the following describes the decentralized identity information verification system with reference to FIG. 2.

In FIG. 2, a decentralized identity information verification system 200 includes an SP 21, an SP 22, and a user 23. Step S210: The SP 21, the SP 22, and the user 23 may separately generate respective decentralized identity (decentralized identity, DID) information, where the DID may be a character string in a specific format used to indicate a digital identity of an entity (including a person, a machine, an object, and the like). In the decentralized identity information verification system, a new identity type is designed to decouple from the centralized identity information verification system. The DID can identify any subject (for example, a person, an organization, things, a data model, or an abstract entity).

Step S220: The user 23 may apply for a digital credential with the SP 21, where the digital credential is a credential issued by the SP 21. Based on this, step 230: The SP 21 may encrypt the digital credential by using a public key of the user 23, and send the encrypted digital credential to the user 23.

Step 230: The user 23 may receive, from the SP 21, the encrypted digital credential corresponding to the user 23. Step S240: The user 23 may send a re-encrypted digital credential to the SP 22. Simply speaking, after decrypting the encrypted digital credential by using a private key of the user 23 and obtaining the digital credential, the user 23 may re-encrypt the digital credential by using a public key of the SP 22, to obtain the re-encrypted digital credential.

It can be learned that the digital credential of the decentralized identity information verification system 200 in FIG. 2 is usually claims for a plurality of pieces of identity information provided by each DID, is encrypted as a whole, cannot be issued separately for each piece of identity information, and the user cannot process the data credential, for example, selecting only some attribute claims in the digital credential, which limits a usage scenario of the user. In addition, the digital credential needs to be stored by the user and is easy to lose.

For better understanding, the following uses an example for description. A user can apply for, with a company, a digital credential issued by the company. To obtain the digital credential, the user needs to provide age information, company position information, health information, and marriage and parenthood information. After the user obtains the digital credential issued by the company from the SP 21 by using the decentralized identity information verification system 200 shown in FIG. 2, the user expects to participate in an education and training activity provided by the company for a manager level and above. In this scenario, the user only sends the company position information in the digital credential to a service provider that provides the education and training activity, but in the decentralized identity system 200 shown in FIG. 2, the user cannot extract only information related to the company position information from the digital credential. In this case, the user can only provide the digital credential for the education and training activity. As a result, the age information, the health information, and the marriage and parenthood information are also provided for the education and training institution, but the user may not expect to provide such information for the education and training institution. The user may refuse to participate in the education and training activity out of consideration for privacy.

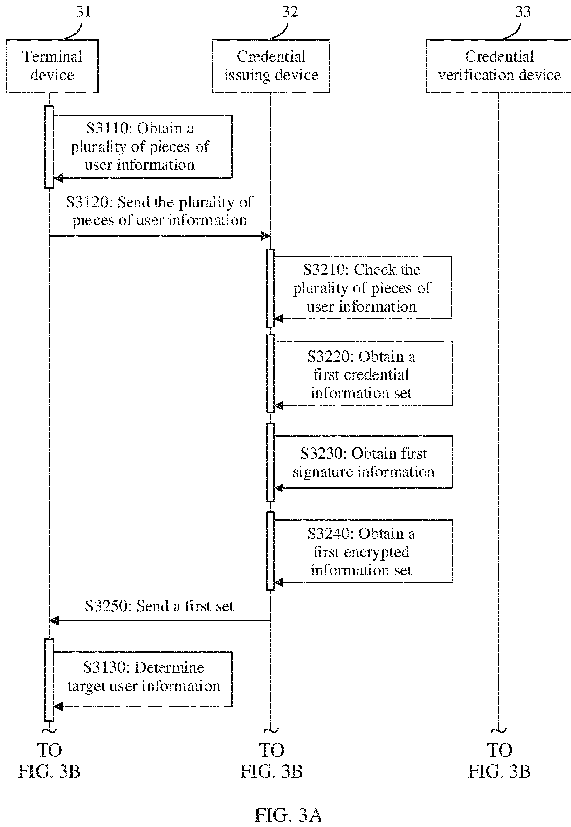

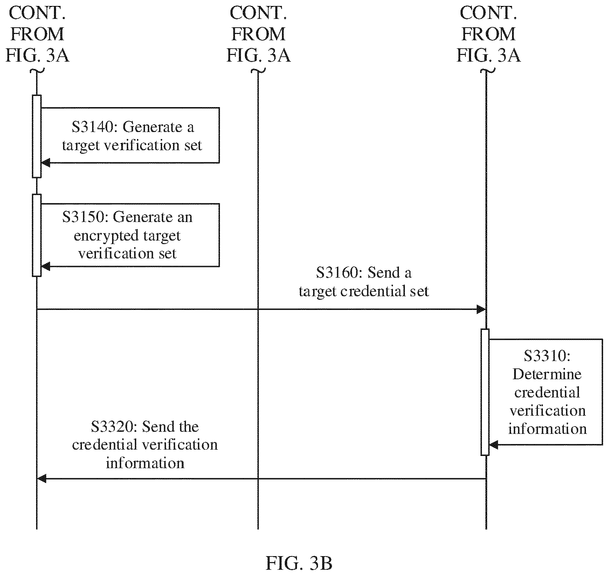

FIG. 3A and FIG. 3B are a diagram of service processing of an identity information processing system according to an embodiment of this application. As shown in FIG. 3A and FIG. 3B, the identity information verification system includes a terminal device 31, a credential issuing device 32, and a credential verification device 33.

The terminal device 31 is a device that has a communication capability and a processing capability. In this embodiment, the terminal device 31 corresponds to a user, that is, the user may operate the terminal device 31. For example, the terminal device 31 may provide various user information for a blockchain system by using the communication capability, or may send various requests to the blockchain system by using the communication capability. In another example, the terminal device 31 may encrypt and/or decrypt related information by using the processing capability, or the terminal device 31 may determine, by using the processing capability, credential information to be provided for the credential issuing device.

The terminal device may be user equipment (user equipment, UE). The UE includes a handheld device, a vehicle-mounted device, a wearable device, or a computing device having a wireless communication function. For example, the UE may be a mobile phone (mobile phone), a tablet computer, or a computer having a wireless transceiver function. Alternatively, the terminal device may be a virtual reality (virtual reality, VR) terminal device, an augmented reality (augmented reality, AR) terminal device, a wireless terminal in industrial control, a wireless terminal in self-driving, a wireless terminal in remote medical, a wireless terminal in a smart grid, a wireless terminal in a smart city (smart city), a wireless terminal in a smart home (smart home), or the like. In this embodiment of this application, an apparatus configured to implement a function of the terminal device may be the terminal device, or may be an apparatus, for example, a chip system, that can support the terminal device in implementing the function. The apparatus may be installed in the terminal or used together with the terminal device. In this embodiment of this application, the chip system may include a chip, or may include a chip and another discrete component. In the technical solutions provided in embodiments of this application, the technical solutions provided in embodiments of this application are described by using an example in which the apparatus configured to implement the function of the terminal is the terminal.

In an implementation solution based on a blockchain technology, the terminal device 31 may apply for, by using the DID described above with the blockchain, a blockchain node corresponding to the terminal device 31, and may be referred to as a first blockchain node in following descriptions.

The credential issuing device 32 is an institution and/or a device that can perform issuance on information provided by the terminal device 31. For ease of description, in an example embodiment of this application, the credential issuing device 31 may indicate a credential issuer that performs issuance on the information provided by the user and/or a credential issuing device used by the credential issuer. The credential issuing device 32 may be responsible for authenticity, accuracy, and the like of the information provided by the terminal device 31. For example, the credential issuing device 32 may be a terminal of an authority. For example, the credential issuing device may be a device used by a government agency that performs issuance on information of a store operated by the user.

The credential issuing device 32 may be a terminal device such as a mobile phone, a tablet computer, a desktop computer, or a portable notebook computer, or may be an independent server, or a server cluster including a plurality of servers. In this embodiment of this application, an apparatus configured to implement a function of the credential issuing device may be the credential issuing device 32, or may be an apparatus, for example, a chip system, that can support the credential issuing device in implementing the function. The apparatus may be installed in the terminal or used together with the credential issuing device. In this embodiment of this application, the chip system may include a chip, or may include a chip and another discrete component. In the technical solutions provided in embodiments of this application, the technical solutions provided in embodiments of this application are described by using an example in which the apparatus configured to implement the function of the credential issuing device is the terminal.

In an implementation solution based on the blockchain technology, the credential issuing device may apply for, by using the DID described above with the blockchain, a blockchain node corresponding to the credential issuing device, and may be referred to as a second blockchain node in following descriptions.

The credential verification device 33 is an institution and/or a device that can perform verification on the credential information provided by the terminal device 31. For ease of description, in an example embodiment of this application, the credential verification device 33 may indicate a credential verifier that performs the verification operation on the credential information provided by the user and/or a credential verification device used by the credential verifier. For example, when the user sends a service request to a service providing device by using the terminal device 31, the service providing device needs to perform verification on a user qualification of the user to ensure that the user is qualified for the service. In this scenario, the user may send the credential information to the credential verification device 33 by using the terminal device 31, and after the verification succeeds, the credential verification device 33 may notify the service providing device of providing the service for the user. It should be understood that the credential verification device 33 and the service providing device may be a same device or may be different devices. This is not limited in this application.

The credential verification device 33 may be a terminal device such as a mobile phone, a tablet computer, a desktop computer, or a portable notebook computer, or may be an independent server, or a server cluster including a plurality of servers. In this embodiment of this application, an apparatus configured to implement a function of the credential issuing device may be the credential verification device 33, or may be an apparatus, for example, a chip system, that can support the credential issuing device in implementing the function. The apparatus may be installed in the terminal or used together with the credential issuing device. In this embodiment of this application, the chip system may include a chip, or may include a chip and another discrete component. In the technical solutions provided in embodiments of this application, the technical solutions provided in embodiments of this application are described by using an example in which the apparatus configured to implement the function of the credential issuing device is the terminal.

In an implementation solution based on the blockchain technology, the credential verification device 33 may apply for, by using the DID described above with the blockchain, a blockchain node corresponding to the credential verification device 33, and may be referred to as a third blockchain node in following descriptions.

As shown in FIG. 3A and FIG. 3B, step S3110: The terminal device 31 may collect a plurality of pieces of user information related to the user. During implementation, the terminal device 31 may provide the plurality of pieces of user information based on an existing credential template. In a related technology, each credential has a fixed credential template, and the user may fill in the user information based on the credential template. The user information may include identity information or attribute information indicating a user identity. For example, the user information may include age information, birthplace information, residence information, gender information, position information, education information, health status information, and the like of the user.

For example, the user information may be used to generate the subsequent credential information, but may not be displayed/exist in a credential issued by the credential issuing terminal. For example, the user may fill in itinerary information of the user in a recent month based on the credential template. However, the information is not information used to generate the credential, but information indispensable to the credential issuing terminal for generating the credential.

During implementation, the terminal device 31 may provide the user information based on an electronic form sent by the credential issuing device 32, or the terminal device 31 may provide the user information by using the first blockchain node corresponding to the terminal device 31.

Step S3120: The terminal device 31 may send the user information to the credential issuing device 32. During implementation, the terminal device 31 may provide the user information for the credential issuing device 32 by using the blockchain technology. Simply speaking, the terminal device 31 may encrypt the user information obtained in step S3110 and store the encrypted user information in the first blockchain node of the user. After receiving a credential issuing request, the credential issuing device 32 may extract, by using the second blockchain node corresponding to the credential issuing device 32, the encrypted first user information provided by the first blockchain node, and obtain the user information after decrypting the encrypted user information.

Step S3210: The credential issuing device 32 may check the user information, and this check is to check a source of the user information, whether the user information meets the credential to be issued, and the like. When the blockchain technology is used, in step S3210, the blockchain technology may be used to determine that the user information is provided by the terminal device 31, is not tampered with, and the first user information is information that recently exists.

Step S3220: The credential issuing device 32 may determine a plurality of pieces of first user information based on the user information, and perform issuing processing on the plurality of pieces of first user information, to obtain a plurality of pieces of first credential information.

As described above, the user information provided by the terminal device 31 may be the same as or different from the user information required for generating the digital credential. During implementation, the credential issuing device 32 may extract, based on an actual requirement from the user information, the plurality of pieces of first user information used for credential issuing, and perform the issuing processing on the first user information, to obtain the plurality of pieces of first credential information.

During implementation, the issuing processing of the credential issuing terminal may be implemented by using blind processing. The blind processing is uniquely mapping each piece of user information to data in a fixed format based on a mapping rule. In other words, the blind processing may have a binding capability and a hiding capability. The binding capability means that the first user information uniquely corresponds to the first credential information, and the hiding capability means that an attacker cannot or finds it difficult to obtain the first user information by using the first credential information. In specific implementation, the credential issuing device 32 may use any blind processing method having the binding capability and the hiding capability to perform the blind processing on the user information.

In a possible implementation, the credential issuing device 32 may perform the blind processing by using a Pedersen commitment (Pedersen commitment). In short, the credential issuing device 32 may perform an operation on the user information by using a blinding factor, to obtain the first credential information, where the blinding factor may be disclosed. During implementation, the blinding factor may be stored on the second blockchain node.

Step S3230: The credential issuing device 32 may perform collective signing on the plurality of pieces of first credential information obtained in step S3220, to obtain first signature information. During implementation, to reflect that the credential issuing device 32 performs issuance on the first credential information, the collective signing may be performed on the plurality of pieces of first credential information by using an aggregate signature algorithm, to obtain the first signature information. In a possible embodiment, the plurality of pieces of first credential information may be signed by using a C-L (camenisch-lysyanskaya) signature algorithm. The C-L signature can be used in a group signature scenario or an aggregate signature scenario, to improve anonymity of the signature and reduce computational complexity of the signature.

To extract, from the plurality of pieces of first credential information, target credential information suitable for various application scenarios, a plurality of pieces of user information further need to be provided for the terminal device 31. For data security, step S3240: Encrypt the plurality of pieces of user information by using a first public key of the terminal device, to generate a plurality of pieces of first encrypted information.

To sum up, the credential issuing terminal 32 may perform the issuing processing on each piece of first user information, so that a part of information in the credential information issued by the credential issuing terminal 32 can be provided for the credential verification terminal 33, which helps the terminal device 31 subsequently select the part of information in the first credential information as the digital credential based on an application scenario.

Therefore, the credential issuing device 32 may determine an obtained first encrypted information set and first credential information set as a first set. Step S3250: The credential issuing device 32 sends the first set to the terminal device. In an implementation implemented by using the blockchain, the credential issuing device 32 may encrypt the first set and store the encrypted first set on the second blockchain node corresponding to the credential issuing device 32, so that another node can extract and use the first set. In addition, the credential issuing device 32 may further encrypt the first set and store the encrypted first set on an issuing end storage unit corresponding to the credential issuing device. For example, the credential issuing device 32 may encrypt the first set, store the encrypted first set in a local storage or a remote storage (for example, a cloud storage), and store a storage address on the second blockchain node in a manner of a hash value.

In addition, to facilitate subsequent verification performed by the credential verification terminal 33 on the credential issuing terminal, the first set may further include the first signature information obtained in step S3230. In other words, the first set includes the first encrypted information set, the first credential information set, and the first signature information.

Although FIG. 3A and FIG. 3B show only the example of generating the first set, during implementation, the terminal device 31 may provide different user information for the credential issuing device 32 based on a plurality of credential templates, and separately apply for credential information based on the user information. Simply speaking, the credential issuing device 31 may further obtain a plurality of pieces of second user information corresponding to the user.

For example, the terminal device 31 may provide, for a related department based on a credential template for applying for a work and residence permit, first user information required for issuing the work and residence permit, and obtain credential information issued by the related department. In addition, the terminal device 31 may provide, for a same department based on a credential template for applying for a single youth, second user information required for issuing the single youth credential, and obtain credential information issued by the same department.

In the two cases, the first user information and the second user information that need to be provided may have duplicate information or may not have duplicate information. The credential issuing device generates, based on step S3210 to step S3240, a second set generated by using the plurality of pieces of second user information, and the second set may include a second encrypted information set and a second credential information set. During implementation, the second set may further include second signature information. It should be noted that the second encrypted information set is a plurality of pieces of second encrypted information that encrypts the plurality of pieces of second user information by using a third public key. The third public key corresponds to the credential issuing device, and when credential issuing devices are the same, the third public key may be the same as or different from the first public key.

In addition, the terminal device 31 may further send the first user information and the second user information to different credential issuing devices, and obtain different credential information from the different credential issuing devices. Simply speaking, another credential issuing device may obtain a plurality of pieces of second user information corresponding to the user, and then generate, as shown in step S3210 to step S3240, a second set generated by using the plurality of pieces of second user information. The second set may include a second encrypted information set and a second credential information set. During implementation, the second set may further include second signature information. It should be noted that the second encrypted information set is a plurality of pieces of second encrypted information that encrypts the plurality of pieces of second user information by using a third public key. The third public key corresponds to the credential issuing device, and when credential issuing devices are different, the third public key is different from the first public key.

For example, the terminal device 31 may provide, for a related department based on a credential template for applying for a work and residence permit, first user information required for issuing the work and residence permit. In addition, the terminal device 31 may provide, for a related department based on a credential template for applying for tax deduction and exemption, second user information required for issuing the tax deduction and exemption. The two credential issuing devices are different. Therefore, the two credential issuing devices may separately encrypt the plurality of pieces of first user information and the plurality of pieces of second user information by using different public keys.

For ease of description, only two types of user information are provided above. However, in actual use, more types of user information and more corresponding credential issuing devices may be included. Details are not described herein.

It can be learned that, in a case in which the credential issuing device 32 issues all identity information as a whole, the blind processing may separately be performed on each piece of identity information, to ensure that the first set meets an issuing requirement in terms of an issuing subject and issued content. In addition, the credential issuing device is unaware of use of the digital credential, which further improves security.

For ease of description, the following first describes an embodiment in which the first set is obtained only from the terminal device 31 with reference to FIG. 3A and FIG. 3B. Specifically, the terminal device 31 may obtain the first set. In an implementation of the blockchain technology, the terminal device 31 may obtain the encrypted first set provided by the second blockchain node and decrypt the encrypted first set, to obtain the first set. In another implementation, the terminal device 31 may obtain, from the second blockchain node, the storage address for storing the encrypted first set, extract the encrypted first set from the storage corresponding to the storage address, and decrypt the encrypted first set, to obtain the first set.

Step S3130: The terminal device 31 may determine target user information requested by the credential verification device 33. During implementation, after sending a credential verification request to the credential verification device 33 by using the blockchain technology, the terminal device 31 may obtain the target user information requested by the credential verification device 33.

Step S3140: The terminal device 31 generates a target verification set corresponding to the target user information. During implementation, the terminal device 31 may not need to provide all user information for the credential verification device 33, or user information provided based on a single credential template may not meet user information required by the credential verification device 33. In this case, the terminal device 31 may further generate various required target verification sets based on a combination of a plurality of obtained sets.

An embodiment in which the target verification set is generated by using a single set is specifically described as follows:
(a) The terminal device 31 decrypts the plurality of first encrypted credentials by using a first private key corresponding to the first public key, to obtain the plurality of pieces of user information. For example, the first private key may be encrypted and stored on the first blockchain node.
(b) The terminal device 31 may extract the target user information from the plurality of pieces of user information.
(c) Target credential information corresponding to the target user information is determined by using a correspondence between the plurality of pieces of target user information and the plurality of pieces of first credential information.
(d) The target user information and the target credential information are determined as the target verification set.

An embodiment in which the target verification set is generated by using a plurality of sets is described below by using an embodiment in which the target verification set is generated by using the first set and the second set. It should be noted that, during implementation, the target verification set may be generated by using more sets. This is not limited in this application.
(a) The plurality of first encrypted credentials may be decrypted by using a first private key corresponding to the first public key, and the plurality of second encrypted credentials may be decrypted by using a third private key corresponding to the third public key, to obtain the plurality of pieces of first user information and the plurality of pieces of second user information.
(b) The target user information is determined by using the plurality of pieces of first user information and the plurality of pieces of second user information.
(c) Target credential information corresponding to the target user information is determined by using a correspondence between the plurality of pieces of first user information and the plurality of pieces of first credential information and a correspondence between the plurality of pieces of second user information and the plurality of pieces of second credential information.
(d) The target user information and the target credential information are determined as the target verification set.

Step S3150: Encrypt the target verification set by using a second public key provided by the credential verification device 33, to generate the encrypted target verification set.

Step S3160: The terminal device 31 may send a target credential set to the credential verification device 33, where the target credential set may include the encrypted target verification set. In an implementation implemented by using the blockchain, the terminal device 31 may encrypt the target credential set and store the encrypted target credential set on the first blockchain node corresponding to the terminal device 31, so that another node can extract and use the target credential set.

It can be learned that, after obtaining the first set from the credential issuing device 32, the terminal device 31 may participate in customization of the target verification set corresponding to the target user information, so that the terminal user can participate in generation of the digital credential based on an actual requirement. This effectively expands a usage scenario of the user and protects user privacy.

In addition, to perform verification on the issuing subject, that is, the credential verification device 33 performs verification on an issuing end of the target credential information in the obtained target verification set, the target credential set may further include the first credential information set and the first signature information. In other words, the target credential set includes the encrypted target verification set, the first credential information set, and the first signature information.

During implementation, the terminal device 31 may further encrypt the target credential set and store the encrypted target credential set on a terminal device storage unit corresponding to the terminal device. For example, the terminal device 31 may encrypt the target credential set, store the encrypted target credential set in a local storage or a remote storage (for example, a cloud storage), and store a storage address on the first second blockchain node in a manner of a hash value.

In other words, the terminal device 31 may store various generated data (for example, first verification information) in the blockchain node, or may store the generated data on a non-blockchain node, for example, may store the generated data in a local storage or a remote storage (for example, a cloud storage) of the terminal device.

For example, the terminal device 31 may determine the storage manner based on a type of the credential information. For example, the terminal device 31 may store authentication-type credential information on the blockchain node corresponding to the terminal device 31, and the authentication-type credential information is a credential of a determining result obtained after the authentication-type credential information needs to be determined only based on a requirement, for example, whether the user is a legal citizen, whether the user is married, and whether the user has a child. In addition, the terminal device stores a professional credential on the non-blockchain node. The professional credential is a credential for which specific content needs to be provided, for example, an identity card photo of the user or fingerprint information of the user.

The credential verification device 33 may obtain the target credential set. In an implementation of the blockchain technology, the credential verification device 33 may obtain, by using the blockchain technology, the encrypted target credential set provided by the first blockchain node, and decrypt the encrypted target credential set, to obtain the target credential set. In another implementation, the credential verification device 33 may obtain, by using the blockchain technology, the storage address that is provided by the first blockchain node and that stores the encrypted first set, extract the encrypted target credential set from the storage corresponding to the storage address, and decrypt the encrypted target credential set, to obtain the target credential set.

Step S3310: After obtaining the target credential set, the credential verification device 33 performs verification on the target verification set, and determines credential verification information, where the credential verification information indicates whether the verification on the target verification set succeeds. In a possible implementation, the credential verification device 33 needs to perform verification on a credential issuer and/or credential content.

In an embodiment of verifying the credential issuer, the credential verification device 33 needs to determine whether the credential issuing device is a target credential issuing device. For example, the credential issuing device needs to check whether the credential issuing device is a first agency that issues the credential, that is, whether the credential issuing device 32 is the first agency needs to be checked. If the credential issuing device 32 is the first agency, the verification succeeds. If the credential issuing device 32 is not the first agency, the verification fails.

In an embodiment of verifying the credential content, the credential verification device 33 further needs to determine whether the credential information obtained based on the target credential set matches the target credential information. For example, the credential verification device 33 needs to perform verification on education information of the user. Therefore, the credential verification device 33 needs to determine whether the credential information extracted from the target credential set is the education information of the user. Optionally, the credential verification device 33 may further determine whether the credential information meets a service requirement. For example, the service requirement is that the user needs to have a high school diploma or above, and the education information of the user extracted by the credential verification device 33 is a bachelor's degree. Therefore, the credential verification device 33 determines that the user meets the service requirement.

Therefore, the credential verification device 33 may process the target credential set based on the following operations:
(aa) A signature verification operation is performed on the first signature information by using the first credential information set, to determine whether the credential issuing device of the first credential information set is the target credential issuing device.
(bb) The encrypted target verification set is decrypted by using a second private key corresponding to the second public key, to obtain the target user information and the target credential information, and it is determined whether the credential information generated by using the target user information matches the target credential information.

During implementation, the credential verification device 33 may perform the operation aa or perform the operation aa and the operation bb based on information included in the obtained target credential set. In short, when the first credential information includes only the target verification set, the credential verification device 33 may perform the operation bb. When the first credential information includes the target verification set, the first credential information set, and the first signature information, the credential verification device 33 may perform the operation aa and the operation bb. During implementation, the credential verification device 33 may perform the operation bb after performing the operation aa, perform the operation aa after performing the operation bb, or simultaneously perform the operation aa and the operation bb. This is not limited in this application.

Step S3320: The credential verification device 33 may send the credential verification information to the terminal device 31.

To sum up, the credential verification device 33 may perform verification on the credential content without disclosing unnecessary information, and use an encryption algorithm in the application, generation, and storage processes, thereby further ensuring security.

In an implementation by using the blockchain technology, the credential verification device 33 may encrypt the credential verification information, store the encrypted credential verification information in the third blockchain node, and send the encrypted credential verification information to the first blockchain node of the user by using the third blockchain node. In an implementation by using a non-blockchain technology, the credential verification device 33 may encrypt the credential verification information, store the encrypted credential verification information in a storage unit (for example, a cloud storage) corresponding to the credential verification device 33, and send the encrypted credential verification information to the terminal device of the user.

During implementation, all blockchain nodes in the blockchain jointly maintain a shared transaction ledger, and the transaction ledger may record devices corresponding to the blockchain nodes, public keys of the devices, and various operations performed. Therefore, the identity information processing system using the blockchain technology can reduce operations such as identity verification performed on the device. Based on this, the example embodiments of this application may include the blockchain-based identity information processing system.

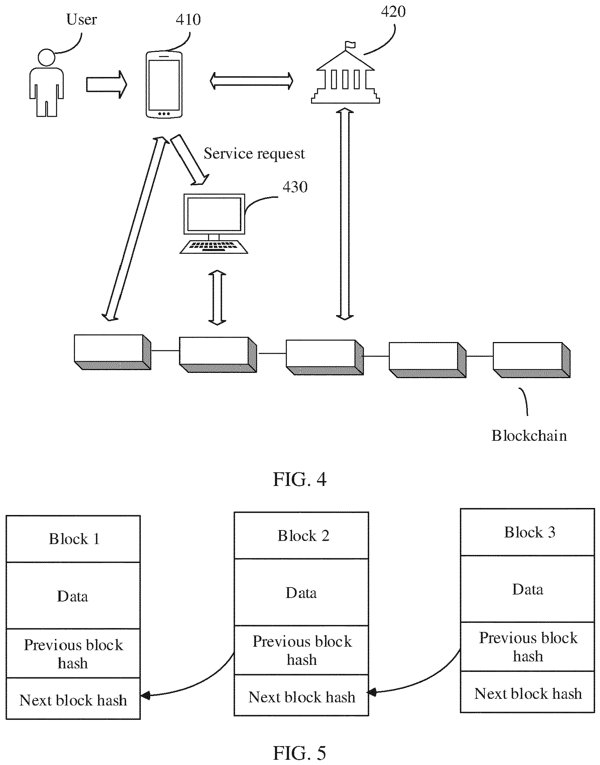

For better understanding, diagrams of scenarios a blockchain-based decentralized identity information verification system are described with reference to FIG. 4 to FIG. 7.

As shown in FIG. 4, the decentralized identity information verification system in this scenario includes a terminal device 410, a credential issuing device 420, a credential verification device 430, and a blockchain system (only a blockchain is shown in FIG. 4) including the blockchain. In FIG. 4, all the terminal device 410, the credential issuing device 420, and the credential verification device 430 may associate created digital identity information with corresponding public keys and record the associated created digital identity information and corresponding public keys in a transaction ledger of the blockchain. The transaction ledger records information such as the digital identity information and the corresponding public keys, and creation record information of a digital credential.

Specifically, the terminal device 410, the credential issuing device 420, and the credential verification device 430 all apply for, with the blockchain, blockchain nodes corresponding to the terminal device 410, the credential issuing device 420, and the credential verification device 430. For example, the terminal device 410 corresponds to a first blockchain node, the credential issuing device 420 corresponds to a second blockchain node, and the credential verification device 430 corresponds to a third blockchain node.

In response to a credential creation operation of a user, the terminal device 410 sends a credential creation request to the credential issuing device 420 based on obtained first digital identity information of the user and user information of the to-be-created credential. During implementation, the terminal device 410 may apply for the credential with the blockchain system by using a smart contract deployed on the first blockchain node. After receiving the credential creation request, the blockchain system sends the credential creation request to a determined credential issuing device. As shown in FIG. 4, the blockchain system may transmit the credential creation request to the second blockchain node by using a blockchain technology.

The credential issuing device 420 may obtain a first set in the manner described above. In this implementation, the first set may include encrypted target verification set, first credential information set, and first signature information. Then, the information is encrypted by using the public key recorded by the terminal device on the transaction ledger, and stored on the first blockchain node, and information indicating that the information is successfully stored is sent to the terminal device 410.

During implementation, the identity information processing system may further store the information in a local storage or a remote storage (for example, a cloud storage). When the information is stored in the remote storage, the terminal device stores, on the first blockchain node, information obtained after address information of the remote storage is processed by using a hash algorithm. In this way, data storage space on the blockchain is saved while data security is ensured.

After obtaining the information indicating that the information is successfully stored, the terminal device 410 obtains the corresponding first set by using the blockchain technology. In response to a service request operation of the user, target credential information required by the user may be obtained from the credential verification device 530. The user terminal 410 may generate a target credential set based on the target credential information. Then, the target credential set is encrypted by using the public key of the credential verification device 530, the encrypted target credential set is stored on the second blockchain node, and information indicating that the encrypted target credential set is successfully stored is sent to the credential verification device 430.

During implementation, the identity information processing system may further store the information in a remote storage (for example, a cloud storage), and then store, on the second blockchain node, information obtained after address information of the remote storage is processed by using the hash algorithm. In this way, data storage space on the blockchain is saved while ensuring data security.

After receiving the information indicating that the encrypted target credential set is successfully stored, the third blockchain node corresponding to the credential verification device 430 may extract the target credential set provided by the first blockchain node and perform verification on the target credential set, to obtain credential verification information. The credential verification device 430 may encrypt the credential verification information by using the public key recorded by the terminal device on the transaction ledger, and then upload the encrypted credential verification information to the third blockchain node.

During implementation, the digital identity information may be presented in a plurality of manners, for example, a DID (Decentralized Identity, decentralized identity), and the DID may also be referred to as a decentralized digital identity. The digital credential may also be presented in a plurality of manners, for example, a verifiable claim (Verifiable Claim, VC for short).

In this application, the blockchain system is a decentralized system, and the decentralized system may include a plurality of nodes (any form of computing device, such as a server or a user device that accesses a network) connected in a form of network communication. The blockchain technology includes a plurality of nodes, and a peer to peer (P2P, Peer To Peer) network is formed between the nodes. A P2P protocol is an application layer protocol running on a transmission control protocol (TCP, Transmission Control Protocol). In the blockchain technology, any machine such as a server or a terminal can be added to become the node. The node includes a hardware layer, a middle layer, an operating system layer, and an application layer.

Functions of each node in the blockchain technology include: (1) Routing is a basic function of the node, which is used to support communication between the nodes. In addition to the routing function, the node may further have the following function: (2) A blockchain includes a series of blocks (Blocks) that are connected to each other based on a generation time sequence. Once being added to the blockchain, a new block is not removed, and the block records record data submitted by the node in the blockchain technology, for example, transaction data.

FIG. 5 is an optional schematic diagram of a block structure (Block Structure) according to an embodiment of this application. Each block includes hash values (the hash value of the block) of a data record stored by the block and the hash value of a previous block. Blocks are connected by the hash value to form the blockchain (Blockchain). In addition, the block may further include information such as a timestamp when the block is generated. The blockchain is essentially a decentralized database, and is a string of data blocks generated by a cryptographic method. Each data block includes related information to perform verification on validity (anti-counterfeiting) of the information and generate a next block.

The smart contract is a computerized protocol, can execute terms of a contract, and is implemented by using code deployed in the shared ledger for execution when a specific condition is met. The code is used to complete an automatic transaction based on an actual service requirement, for example, querying a logistics status of goods purchased by a buyer or transferring a virtual resource of the buyer to an address of a merchant after the buyer signs for the goods. Of course, the smart contract is not limited to executing the contract for the transaction, but may also execute a contract for processing received information.

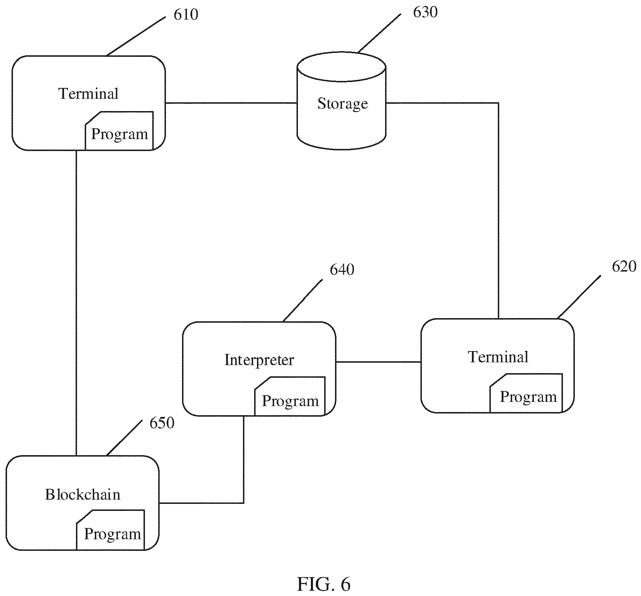

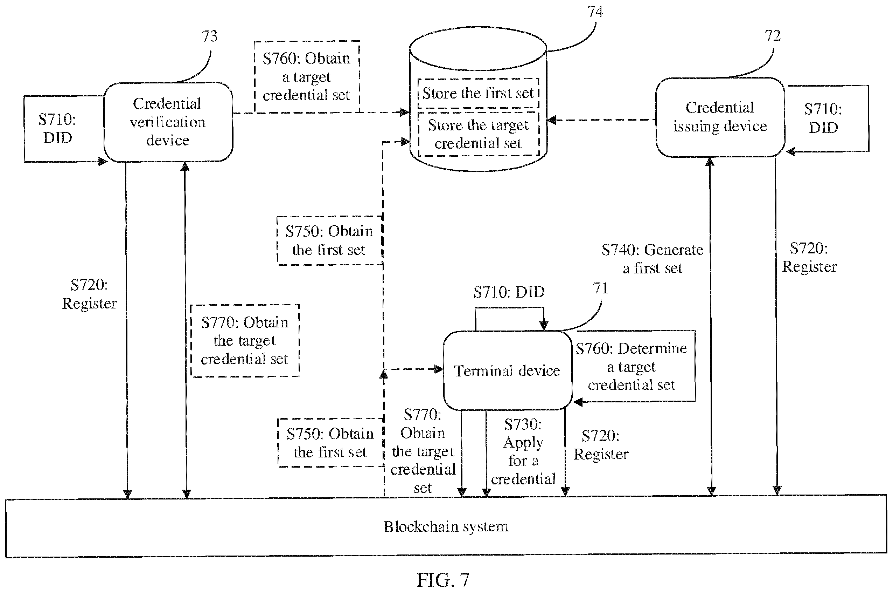

The following describes the blockchain-based identity information processing system with reference to FIG. 6 and FIG. 7. FIG. 6 is a diagram of a system architecture of a blockchain-based identity information processing system according to an embodiment of this application. FIG. 7 is a flowchart of a processing procedure of a blockchain-based identity information processing system based on the system architecture shown in FIG. 6.

As shown in FIG. 6, a terminal 610 may indicate devices that participate in credential processing by using a blockchain technology, including a user terminal, a credential issuing device, and a credential verification device. The terminal 610 may have programs for implementing respective functions of the user terminal, the credential issuing device, and the credential verification device. During implementation, the program may be in a form of one or more software development kits (SDKs). For example, when the terminal 610 is the user terminal, the program may include code for generating a DID, submitting the DID, and sending a credential application to the credential issuing device, and generating the target credential set mentioned above.

A terminal 620 is a third-party device that does not directly participate in the credential processing. During implementation, the terminal 620 may indicate a device that expects to view a record of credential verification. In this case, the terminal 620 may obtain, by using a program within an interpreter 640, DID information, credential information, and the like related to the verification. When a part of the information is stored outside the chain (for example, in a local storage or a cloud storage), the interpreter 640 may alternatively provide a storage address of a storage 630 for the terminal 620.

In a blockchain-based implementation, various generated data (for example, first verification information) may be stored in a blockchain node, or may be stored off the chain, for example, may be stored in a local storage or a remote storage. During implementation, authentication-type credential information may be stored on a blockchain node corresponding to the authentication-type credential information, and the authentication-type credential information is a credential of a determining result obtained after the authentication-type credential information needs to be determined only based on a requirement, for example, whether a user is a legal citizen, whether the user is married, and whether the user has a child. In addition, the terminal device stores a professional credential on a non-blockchain node. The professional credential is a credential for which specific content needs to be provided, for example, an identity card photo of the user or fingerprint information of the user.

It can be learned from FIG. 6 that the decentralized identity information processing system based on the blockchain technology can not only generate the credential, issue the credential, and perform verification on the credential, but also open a viewing function, and open viewing permission to the terminal that needs to view a processing record of the credential. In addition, different storage manners can be determined based on types of the credential.

The following describes in detail a processing procedure of a blockchain-based identity information processing system with reference to FIG. 7.

As shown in FIG. 7, step S710: A terminal device 71, a credential issuing device 72, and a credential verification device 73 may apply for respective DID by using an application. For example, a user may obtain a DID of the user and corresponding public and private keys by using a DID-related application based on information that needs to be provided.

Step S720: The terminal device 71, the credential issuing device 72, and the credential verification device 73 send, to a blockchain system by using the DIDs and the public keys, a request for applying for new blockchain accounts. After sending the request, the terminal device 71, the credential issuing device 72, and the credential verification device 73 may obtain, from the blockchain system, an indication that the new blockchain accounts have been generated. The blockchain accounts may be associated with blockchain addresses on the blockchain system. Therefore, the terminal device 71, the credential issuing device 72, and the credential verification device 73 may obtain blockchain nodes corresponding to the terminal device 71, the credential issuing device 72, and the credential verification device 73.

Step S730: The terminal device 71 may send a credential application request to the blockchain system by using a first blockchain node. During implementation, the first blockchain node may send the credential application request by using a pre-disposed first smart contract. After receiving the request, the blockchain system may notify a second blockchain node of the credential issuing device 72. The credential issuing device 72 may collect required user information based on the credential requested by the user. During implementation, the user information provided by the first blockchain node may be obtained by using a blockchain technology based on a requirement. During implementation, the terminal device 71 may obtain the public key corresponding to the credential issuing device 72, then encrypt the user information by using the public key, and provide the user information for the blockchain by using the first blockchain node. The credential issuing device 72 may obtain the encrypted user information provided by the first blockchain node, and then decrypt the user information by using the private key of the credential issuing device 72, to obtain the user information. In addition, during implementation, the credential issuing device 72 may further obtain the user information by using an off-chain address stored on the blockchain.

Step S740: The credential issuing device 72 may obtain a first set by using the obtained user information based on the steps described above. The obtained first set may be encrypted by using the public key of the terminal device 71, and the encrypted first set is uploaded to the blockchain by using the first blockchain node, or is stored outside the blockchain. As shown in FIG. 7, the first set may be encrypted and stored on an off-chain storage 74. The off-chain storage 74 may indicate a local storage of each terminal, or may indicate a remote storage (for example, a cloud storage) of each terminal. This is not limited in this application.

After the terminal device 71 receives an instruction indicating storage completion, step S750: The terminal device 71 may obtain, by using the first blockchain node, the first set provided by the second blockchain node, or may obtain, based on a storage address of the off-chain storage 74, the first set stored in the off-chain storage 74.

Subsequently, Step S760: The terminal device 71 may determine a target credential set based on the credential on which the credential verification device needs to perform verification. The determined target credential set may be encrypted by using the public key of the credential verification device 73, and may be stored on the blockchain by using a third blockchain node, or may be stored outside the chain, as shown in FIG. 7, stored in the off-chain storage 74. The off-chain storage 74 may indicate a local storage of each terminal, or may indicate a remote storage (for example, a cloud storage) of each terminal. This is not limited in this application.

After the storage is completed, the blockchain system may indicate the credential verification device to perform step S770: Obtain the target credential set, generate credential verification information based on the target credential set and the foregoing steps, and store the credential verification information in the blockchain system based on the foregoing steps.

It may be understood that, to implement the foregoing functions, the identity information processing device according to the example embodiments of this application may include a corresponding hardware structure and/or a software module for performing the functions. A person skilled in the art should be easily aware that, with reference to units and algorithm steps of the examples described in embodiments disclosed in this specification, embodiments of this application can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of embodiments of this application.

In embodiments of this application, the terminal or the like may be divided into functional modules based on the foregoing method examples. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, division into the modules is an example, is merely logical function division, and may be other division in an actual implementation.

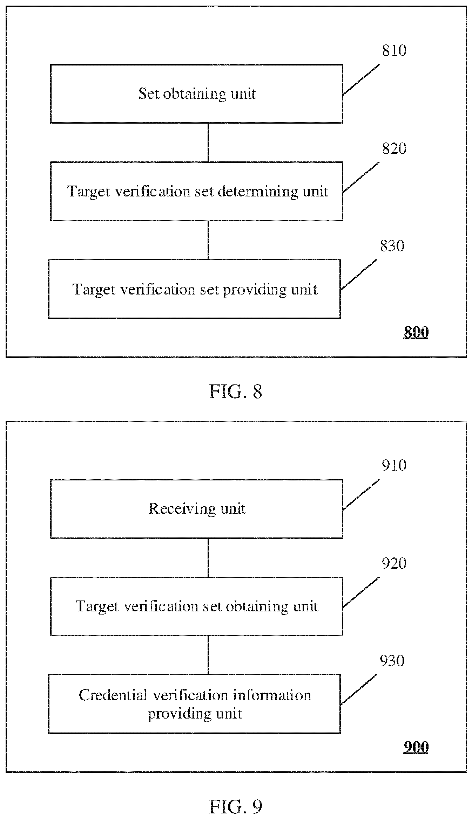

When each functional module is obtained through division based on each corresponding function, FIG. 8 is a possible schematic diagram of a structure of the identity information processing device in the foregoing embodiments.

When an identity information processing device 800 performs the steps performed by the terminal device 31 in FIG. 3A and FIG. 3B, the identity information processing device 800 may include a set obtaining unit 810, a target verification set determining unit 820, and a target verification set providing unit 830.

The set obtaining unit 810 is configured to obtain, from a credential issuing device, a first set corresponding to a plurality of pieces of first user information, where the first set includes a first encrypted information set and a first credential information set, the first encrypted information set includes a plurality of pieces of first encrypted information obtained after encryption is correspondingly performed on the plurality of pieces of first user information, and the first credential information set includes a plurality of pieces of first credential information obtained after issuing processing is performed on the plurality of pieces of first user information.

The target verification set determining unit 820 is configured to determine, based on the first encrypted information set and the first credential information set in the first set, a target verification set corresponding to target user information of a user, where the target verification set includes target user information in the plurality of pieces of first user information and target credential information that corresponds to the target user information and that is in the plurality of pieces of first credential information.

The verification set providing unit 830 may be configured to provide the target verification set for a credential verification device.

Optionally, the set obtaining unit 810 is further configured to obtain a second set corresponding to a plurality of pieces of second user information, where the second set includes a second encrypted information set and a second credential information set, the second encrypted information set includes a plurality of pieces of second encrypted information obtained after encryption is correspondingly performed on the plurality of pieces of second user information, and the second credential information set includes a plurality of pieces of second credential information obtained after issuing processing is performed on the plurality of pieces of second user information.

Optionally, the verification set determining unit 830 is further configured to determine, based on the second encrypted information set and the second credential information set in the second set, the target verification set corresponding to the target user information of the user, where the target verification set includes the target user information and target credential information corresponding to the target user information, and the target verification set includes target user information in the plurality of pieces of second user information and target credential information that corresponds to the target user information and that is in the plurality of pieces of second credential information.

Optionally, the verification set determining unit 830 is further configured to determine, based on the first encrypted information set and the first credential information set in the first set and the second encrypted information set and the second credential information set in the second set, the target verification set corresponding to the target user information of the user, where the target verification set includes the target user information in the plurality of pieces of first user information, target user information in the plurality of pieces of second user information, the target credential information that corresponds to the target user information and that is in the plurality of pieces of first credential information, and target credential information that corresponds to the target user information and that is in the plurality of pieces of second credential information.

When an identity information processing device according to an embodiment of this application performs the steps performed by the credential verification device 33 in FIG. 3A and FIG. 3B, the identity information processing device may indicate an identity information processing device 900 in FIG. 9.

The identity information verification device may include a receiving device 910, a target verification set obtaining unit 920, and a credential verification information providing unit 930.

The receiving unit 910 is configured to receive a service request.

The target verification set obtaining unit 920 is configured to obtain a target verification set from a terminal device, where the target verification set includes target user information and target credential information that correspond to a service.

The credential verification information providing unit 930 is configured to: perform verification on the target verification set, and provide credential verification information for the terminal device, where the credential verification information indicates whether the verification on the target verification set succeeds.

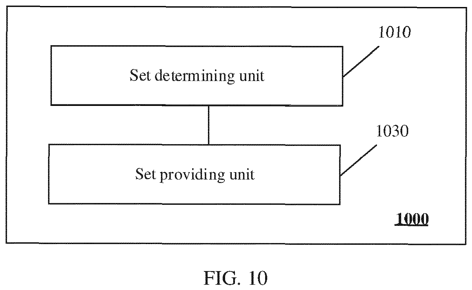

When an identity information processing device according to an embodiment of this application performs the steps performed by the credential issuing device 32 in FIG. 3A and FIG. 3B, the identity information processing device may indicate an identity information processing device 1000 in FIG. 10.

The identity information processing device 1000 may include a set determining unit 1010 and a set providing unit 1020.

The set determining unit 1010 is configured to determine a first set corresponding to a plurality of pieces of first user information, where the first set includes a first encrypted information set and a first credential information set, the first encrypted information set includes a plurality of pieces of first encrypted information obtained after encryption is correspondingly performed on the plurality of pieces of first user information, and the first credential information set includes a plurality of pieces of first credential information obtained after issuing processing is performed on the plurality of pieces of first user information.

The set providing unit 1020 provides the first set for a terminal device.

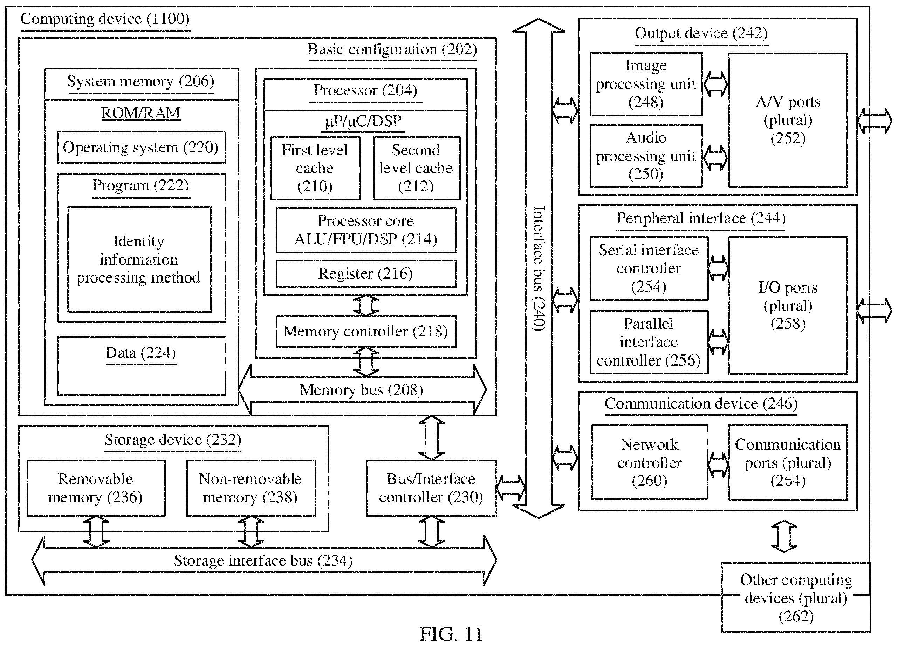

In addition, the identity information processing system in the example embodiments of this application may include the identity information processing device 800 shown in FIG. 8, the identity information processing device 900 shown in FIG. 9, and the identity information processing device 1000 shown in FIG. 10. During implementation, the identity information processing device 800 and a first blockchain node corresponding to the identity information processing device 800, the identity information processing device 900 and a second blockchain node corresponding to the identity information processing device 900, and/or the identity information processing device 1000 and a third blockchain node corresponding to the identity information processing device 1000 may all use a computing device shown in FIG. 11.

FIG. 11 is a block diagram of a computing device according to an embodiment of this application. A computing device 1100 typically includes a system memory 206 and one or more processors 204. A memory bus 208 may be used for communication between the processor 204 and the system memory 206.

Depending on a desired configuration, the processor 204 may be any type of processor, including but not limited to, a microprocessor (µP), a microcontroller (µC), a digital information processor (DSP), or any combination thereof. The processor 204 may include one or more levels of cache, such as a first level cache 210 and a second level cache 212, a processor core 214, and a register 216. The example processor core 214 may include an arithmetic logic unit (ALU), a floating point unit (FPU), a digital signal processing core (DSP core), or any combination thereof. An example memory controller 218 may be used with the processor 204, or in some implementations, the memory controller 218 may be an internal part of the processor 204.

The processor 210 may run the identity information processing device provided in embodiments of this application, to help a user participate in customization of a digital credential that matches a specific scenario, thereby avoiding privacy disclosure. The processor 210 may include different components. For example, when a CPU and a GPU are integrated, the CPU and the GPU may cooperate to perform the identity information processing method provided in embodiments of this application. For example, a part of the algorithm in the identity information processing method is executed by the CPU, and the other part is executed by the GPU, to obtain fast processing efficiency.

Depending on a desired configuration, the system memory 206 may be any type of memory, including but not limited to, a volatile memory (such as an RAM), a nonvolatile memory (such as an ROM, a flash memory, or the like), or any combination thereof. The system memory 206 may include an operating system 220, one or more programs 222, and program data 224. In some implementations, the program 222 may be arranged as instructions executed on the operating system by the one or more processors 204 using the program data 224.

The instructions may be used to perform the steps in the corresponding embodiments in FIG. 3A and FIG. 3B to FIG. 7. When the computing device 1100 is a terminal device, the program 222 may include: The terminal device obtains, from a credential issuing device, a first set corresponding to a plurality of pieces of first user information, where the first set includes a first encrypted information set and a first credential information set, the first encrypted information set includes a plurality of pieces of first encrypted information obtained after encryption is correspondingly performed on the plurality of pieces of first user information, and the first credential information set includes a plurality of pieces of first credential information obtained after issuing processing is performed on the plurality of pieces of first user information; the terminal device determines, based on the first encrypted information set and the first credential information set in the first set, a target verification set corresponding to target user information of a user, where the target verification set includes target user information in the plurality of pieces of first user information and target credential information that corresponds to the target user information and that is in the plurality of pieces of first credential information; and the terminal device provides the target verification set for a credential verification device.

When the computing device 1100 is a verification credential device, the program 222 may include: The credential verification device receives a service request; the credential verification device obtains a target verification set from a terminal device, where the target verification set includes target user information and target credential information that correspond to a service; and the credential verification device performs verification on the target verification set, and provides credential verification information for the terminal device, where the credential verification information indicates whether the verification on the target verification set succeeds.

When the computing device 1100 is a credential issuing device, the program 222 may include: The credential issuing device determines a first set corresponding to a plurality of pieces of first user information, where the first set includes a first encrypted information set and a first credential information set, the first encrypted information set includes a plurality of pieces of first encrypted information obtained after encryption is correspondingly performed on the plurality of pieces of first user information, and the first credential information set includes a plurality of pieces of first credential information obtained after issuing processing is performed on the plurality of pieces of first user information; and the credential issuing device provides the first set for a terminal device.

As shown in FIG. 11, a type of a storage device 232 is not limited in this application. For example, the storage device 232 may be a storage area network device, or may be a storage device including a file system, for example, a network attached storage (Network Attached Storage, NAS) device.

In addition, the storage device 232 may include a removable memory 232 and a non-removable memory 238. A storage unit mentioned in this application indicates storage space distributed on a hard disk that is used as the non-removable memory. The hard disk may indicate a plurality of types of hard disks, for example, a solid-state drive (Solid-State Drive, SSD), a serial attached SCSI (Serial Attached SCSI, SAS), or a fiber channel (Fiber Channel, FC) hard disk drive (Hard Disk Drive, HDD), where the SCSI (Small Computer System Interface) is a midrange computer system interface or the like.

For example, when the storage device 232 is an SAN device, the storage unit may indicate a segment of logical storage space distributed on the hard disk, that is, a logic unit (Logic Unit, LU), and a logic unit number (Logic Unit Number, LUN) is used to identify a logic unit. The logic unit is addressable through the SCSI. During implementation, the storage device may partition the physical hard disk, and each partition may be used as a storage unit (that is, the LUN) that has a logical address for a host to access.

The computing device 200 may further include an interface bus 240 that facilitates communication from various interface devices (for example, an output device 242, a peripheral interface 244, and a communication device 246) to a basic configuration through a bus/interface controller 230. The example output device 242 includes a graphics processing unit 248 and an audio processing unit 250, which may be configured to facilitate communication with various external devices such as a monitor or a speaker through one or more A/V ports 252.

The output device 242 may be a monitor, and the monitor is configured to display an image, a video, or the like. The monitor includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flexible light-emitting diode, FLED), a mini-LED, a micro-LED, a micro-OLED, a quantum dot light emitting diode (quantum dot light emitting diode, OLED), or the like. In some embodiments, the monitor may include one or N displays, where N is a positive integer greater than 1. The monitor may be configured to display information input by a user or information provided for the user, and various graphical user interfaces (graphical user interface, GUI). For example, the monitor may display a photo, a video, a web page, a file, or the like. For another example, the monitor may display a graphical user interface. The graphical user interface includes a status bar, a navigation bar that can be hidden, a time and weather widget (widget), and an application icon, for example, a browser icon. The status bar includes an operator name (for example, China Mobile), a mobile network (for example, 4G), time, and a battery level. The navigation bar includes an icon of a back (back) button, an icon of a home (home) button, and an icon of a forward button. In addition, it may be understood that, in some embodiments, the status bar may further include a Bluetooth icon, a Wi-Fi icon, an icon of an externally-connected device, and the like. It may be further understood that, in some other embodiments, the graphical user interface may further include a dock bar, and the dock bar may include an icon of a frequently-used application and the like. After the processor 210 detects a touch event of a user on an application icon by using a finger (a stylus or the like), in response to the touch event, the processor 210 starts a user interface of an application corresponding to the application icon, and displays the user interface of the application on the monitor. Corresponding to the example embodiments of this application, the monitor may display a spreadsheet that needs to be filled in by a user, and the spreadsheet may include various types of user information.

In this embodiment of this application, the monitor may be one integrated flexible display, or may be a spliced display including two rigid screens and one flexible screen located between the two rigid screens.

The example peripheral interface 244 may include a serial interface controller 254 and a parallel interface controller 256, which may be configured to facilitate communication with external devices such as an input device (for example, a keyboard, a mouse, a pen, a voice input device, or a touch input device) or another peripheral (for example, a printer or a scanner) through one or more I/O ports 258. The example communication device 246 may include a network controller 260, which may be arranged to facilitate communication with one or more other computing devices 262 through a network communication link and one or more communication ports 264.

The network communication link may be an example of a communication medium. The communication medium may usually be embodied as computer-readable instructions, a data structure, a program module in a modulated data signal, such as a carrier or another transmission mechanism, and may include any information delivery medium. The "modulated data signal" may be such a signal that one or more of data sets or changes of the modulated data signal may be made in a manner of coding information in the signal. As a non-limiting example, the communication medium may include a wired medium such as a wired network or a dedicated network, and various wireless media such as sound, radio frequency (RF), microwave, infrared (IR), or another wireless medium. A term computer-readable medium used herein may include both a storage medium and a communication medium.

The computing device 1100 may be implemented as a server, such as a file server, a database server, an application server, and a WEB server, or may be implemented as a part of a small-sized portable (or mobile) electronic device. The electronic device may be, for example, a cellular phone, a personal digital assistant (PDA), a personal media player device, a wireless network browsing device, a personal head-mounted device, an application-specific device, or a hybrid device that may include any of the foregoing functions. The computing device 200 may further be implemented as a personal computer configured to include a desktop computer and a notebook computer.

It should be understood that, in actual application, the computing device 1100 may include more or fewer components than those shown in FIG. 11. This is not limited in this embodiment of this application. The computing device 1100 shown in the figure is merely an example, and the computing device 1100 may have more or fewer components than those shown in the figure, may combine two or more components, or may have different component configurations. The components shown in the figure may be implemented by hardware including one or more signal processing and/or application-specific integrated circuits, software, or a combination of hardware and software.

An embodiment of this application provides an identity information processing device. The identity information processing device includes a processor; and a memory configured to store processor-executable instructions, where the processor is configured to implement the foregoing methods when executing the instructions.

An embodiment of this application provides a non-volatile computer-readable storage medium, where the non-volatile computer-readable storage medium stores computer program instructions. When the computer program instructions are executed by a processor, the foregoing methods are implemented.

An embodiment of this application provides a computer program product, including computer-readable code or a non-volatile computer-readable storage medium carrying computer-readable code. When the computer-readable code is run in a processor of an electronic device, the processor in the electronic device performs the foregoing methods.

The computer-readable storage medium may be a tangible device that may retain and store instructions for use by an instruction execution device. The computer-readable storage medium may be, for example, but is not limited to, an electrical storage device, a magnetic storage device, an optical storage device, an electromagnetic storage device, a semiconductor storage device, or any suitable combination thereof. More specific examples (non-exhaustive list) of the computer-readable storage medium include: a portable computer disk, a hard disk, a random access memory (Random Access Memory, RAM), a read-only memory (Read-Only Memory, ROM), an erasable programmable read-only memory (Electrically Programmable Read-Only-Memory, EPROM or a flash memory), a static random access memory (Static Random Access Memory, SRAM), a portable compact disc read-only memory (Compact Disc Read-Only Memory, CD-ROM), a digital versatile disc (Digital Video Disc, DVD), a memory stick, a floppy disk, a mechanical coding device, for example, a punching card or a groove protrusion structure that stores instructions, and any suitable combination thereof.

The computer-readable program instructions or code described herein may be downloaded from a computer-readable storage medium to each computing/processing device, or downloaded to an external computer or an external storage device over a network, such as the Internet, a local area network, a wide area network, and/or a wireless network. The network may include copper transmission cables, optical fiber transmission, wireless transmission, routers, firewalls, switches, gateway computers, and/or edge servers. A network adapter card or a network interface in each computing/processing device receives computer-readable program instructions from a network, and forwards the computer-readable program instructions for storage in a computer-readable storage medium in each computing/processing device.

The computer program instructions used to perform operations in this application may be assembly instructions, instruction set architecture (Instruction Set Architecture, ISA) instructions, machine instructions, machine-related instructions, microcode, firmware instructions, status setting data, or source code or target code written in one or any combination of more programming languages. The programming languages include object-oriented programming languages such as Smalltalk and C++, and a conventional procedural programming language such as "C" or a similar programming language. The computer-readable program instructions may be executed entirely on a user computer, partly on the user computer, as a stand-alone software package, partly on the user computer and partly on a remote computer, or entirely on the remote computer or a server. When a remote computer is involved, the remote computer may be connected to a user computer over any type of network, including a local area network (Local Area Network, LAN) or a wide area network (Wide Area Network, WAN), or may be connected to an external computer (for example, connected by using an Internet service provider over the Internet). In some embodiments, an electronic circuit, for example, a programmable logic circuit, a field programmable gate array (Field Programmable Gate Array, FPGA), or a programmable logic array (Programmable Logic Array, PLA), is customized by using status information of computer-readable program instructions. The electronic circuit may execute the computer-readable program instructions, to implement various aspects of this application.

The various aspects of this application are described herein with reference to the flowcharts and/or the block diagrams of the method, the apparatus (system), and the computer program product according to embodiments of this application. It should be understood that each block in the flowcharts and/or the block diagrams and combinations of blocks in the flowcharts and/or the block diagrams may be implemented by computer-readable program instructions.

The computer-readable program instructions may be provided for a processor of a general-purpose computer, a dedicated computer, or another programmable data processing apparatus to produce a machine, so that the instructions, when executed by the processor of the computer or the another programmable data processing apparatus, create an apparatus for implementing functions/actions specified in one or more blocks in the flowcharts and/or block diagrams. Alternatively, the computer-readable program instructions may be stored in a computer-readable storage medium. The instructions enable a computer, a programmable data processing apparatus, and/or another device to work in a specific manner. Therefore, the computer-readable medium storing the instructions includes an artifact that includes instructions for implementing various aspects of functions/actions specified in one or more blocks in the flowcharts and/or the block diagrams.

Alternatively, the computer-readable program instructions may be loaded onto a computer, another programmable data processing apparatus, or another device, so that a series of operation steps are performed on the computer, the another programmable data processing apparatus, or the another device to produce a computer-implemented process. Therefore, the instructions executed on the computer, the another programmable data processing apparatus, or the another device implement functions/actions specified in one or more blocks in the flowcharts and/or the block diagrams.

The flowcharts and the block diagrams in the appended drawings illustrate system architectures, functions, and operations of possible implementations of apparatuses, systems, methods, and computer program products according to a plurality of embodiments of this application. In this regard, each block in the flowcharts or the block diagrams may represent a module, a program segment, or a part of the instructions, where the module, the program segment, or the part of the instructions includes one or more executable instructions for implementing a specified logical function. In some alternative implementations, the functions marked in the blocks may also occur in a sequence different from that marked in the accompanying drawings. For example, two consecutive blocks may actually be executed substantially in parallel, and sometimes may be executed in a reverse order, depending on a function involved.

It should also be noted that each block in the block diagrams and/or the flowcharts and a combination of blocks in the block diagrams and/or the flowcharts may be implemented by hardware (for example, a circuit or an ASIC (Application-Specific Integrated Circuit, application-specific integrated circuit)) that performs a corresponding function or action, or may be implemented by a combination of hardware and software, for example, firmware.

Although the present invention is described with reference to embodiments, in a process of implementing the present invention that claims protection, a person skilled in the art may understand and implement another variation of the disclosed embodiments by viewing the accompanying drawings, the disclosed content, and the accompanying claims. In the claims, "comprising" (comprising) does not exclude another component or another step, and "a" or "one" does not exclude a case of a plurality. A single processor or another unit may implement several functions enumerated in the claims. Some measures are recorded in dependent claims that are different from each other, but this does not mean that these measures cannot be combined to produce better effect.

Embodiments of this application are described above. The foregoing descriptions are examples, are not exhaustive, and are not limited to the disclosed embodiments. Many modifications and variations are apparent to a person of ordinary skill in the art without departing from the scope and spirit of the described embodiments. Selection of terms used in this specification is intended to best explain embodiment principles, actual application, or improvements to technologies in the market, or to enable another person of ordinary skill in the art to understand the embodiments disclosed in this specification.

## Claims

1. An identity information processing method, wherein the method comprises:
obtaining, by a terminal device from a credential issuing device, a first set corresponding to a plurality of pieces of first user information, wherein the first set comprises a first encrypted information set and a first credential information set, the first encrypted information set comprises a plurality of pieces of first encrypted information obtained after encryption is correspondingly performed on the plurality of pieces of first user information, and the first credential information set comprises a plurality of pieces of first credential information obtained after issuing processing is performed on the plurality of pieces of first user information;
determining, by the terminal device based on the first encrypted information set and the first credential information set in the first set, a target verification set corresponding to target user information of a user, wherein the target verification set comprises target user information in the plurality of pieces of first user information and target credential information that corresponds to the target user information and that is in the plurality of pieces of first credential information; and
providing, by the terminal device, the target verification set for a credential verification device.

2. The method according to claim 1, wherein the obtaining, by a terminal device from a credential issuing device, a first set corresponding to a plurality of pieces of first user information comprises:
obtaining, by the terminal device by using a first blockchain node corresponding to the terminal device, the first set provided by a second blockchain node corresponding to the credential issuing device.

3. The method according to claim 1, wherein the obtaining, by a terminal device from a credential issuing device, a first set corresponding to a plurality of pieces of first user information comprises:
initiating, by the terminal device, a data request; and
obtaining, by the credential issuing device, the first set from local or cloud storage to respond to the data request initiated by the terminal device.

4. The method according to any one of claims 1 to 3, wherein the method further comprises:
obtaining, by the terminal device, a second set corresponding to a plurality of pieces of second user information, wherein the second set comprises a second encrypted information set and a second credential information set, the second encrypted information set comprises a plurality of pieces of second encrypted information obtained after encryption is correspondingly performed on the plurality of pieces of second user information, and the second credential information set comprises a plurality of pieces of second credential information obtained after issuing processing is performed on the plurality of pieces of second user information.

5. The method according to claim 4, wherein the method further comprises:
determining, by the terminal device based on the second encrypted information set and the second credential information set in the second set, the target verification set corresponding to the target user information of the user, wherein the target verification set comprises the target user information and target credential information corresponding to the target user information, and the target verification set comprises target user information in the plurality of pieces of second user information and target credential information that corresponds to the target user information and that is in the plurality of pieces of second credential information.

6. The method according to claim 4, wherein the determining, by the terminal device based on the first encrypted information set and the first credential information set in the first set, a target verification set corresponding to target user information of a user comprises:
determining, by the terminal device based on the first encrypted information set and the first credential information set in the first set and the second encrypted information set and the second credential information set in the second set, the target verification set corresponding to the target user information of the user, wherein the target verification set comprises the target user information in the plurality of pieces of first user information, target user information in the plurality of pieces of second user information, the target credential information that corresponds to the target user information and that is in the plurality of pieces of first credential information, and target credential information that corresponds to the target user information and that is in the plurality of pieces of second credential information.

7. The method according to claim 1, wherein the first set further comprises first signature information obtained after the credential issuing device performs collective signing on the plurality of pieces of first credential information.

8. The method according to claim 7, wherein after the providing, by the terminal device, the target verification set for the credential verification device, the method further comprises:
providing, by the terminal device, the first credential information set and the first signature information for the credential verification device.

9. An identity information processing method, wherein the method comprises:
receiving, by a credential verification device, a service request;
obtaining, by the credential verification device, a target verification set from a terminal device, wherein the target verification set comprises target user information and target credential information that correspond to a service; and
performing, by the credential verification device, verification on the target verification set, and providing credential verification information for the terminal device, wherein the credential verification information indicates whether the verification on the target verification set succeeds.

10. The method according to claim 9, wherein the method further comprises:
obtaining, by the credential verification device, a first credential information set and first signature information from the terminal device, wherein the first credential information set comprises a plurality of pieces of first credential information, and the first signature information is information obtained after collective signing is performed on the plurality of pieces of first credential information.

11. A terminal device, comprising:
a set obtaining unit, configured to obtain, from a credential issuing device, a first set corresponding to a plurality of pieces of first user information, wherein the first set comprises a first encrypted information set and a first credential information set, the first encrypted information set comprises a plurality of pieces of first encrypted information obtained after encryption is correspondingly performed on the plurality of pieces of first user information, and the first credential information set comprises a plurality of pieces of first credential information obtained after issuing processing is performed on the plurality of pieces of first user information;
a target verification set determining unit, configured to determine, based on the first encrypted information set and the first credential information set in the first set, a target verification set corresponding to target user information of a user, wherein the target verification set comprises target user information in the plurality of pieces of first user information and target credential information that corresponds to the target user information and that is in the plurality of pieces of first credential information; and
a target verification set providing unit, configured to provide the target verification set for a credential verification device.

12. The terminal device according to claim 11, wherein the set obtaining unit is further configured to obtain a second set corresponding to a plurality of pieces of second user information, wherein the second set comprises a second encrypted information set and a second credential information set, the second encrypted information set comprises a plurality of pieces of second encrypted information obtained after encryption is correspondingly performed on the plurality of pieces of second user information, and the second credential information set comprises a plurality of pieces of second credential information obtained after issuing processing is performed on the plurality of pieces of second user information.

13. The terminal device according to claim 12, wherein the verification set determining unit is further configured to determine, based on the second encrypted information set and the second credential information set in the second set, the target verification set corresponding to the target user information of the user, wherein the target verification set comprises the target user information and target credential information corresponding to the target user information, and the target verification set comprises target user information in the plurality of pieces of second user information and target credential information that corresponds to the target user information and that is in the plurality of pieces of second credential information.

14. The terminal device according to claim 12, wherein the verification set determining unit is further configured to determine, based on the first encrypted information set and the first credential information set in the first set and the second encrypted information set and the second credential information set in the second set, the target verification set corresponding to the target user information of the user, wherein the target verification set comprises the target user information in the plurality of pieces of first user information, target user information in the plurality of pieces of second user information, the target credential information that corresponds to the target user information and that is in the plurality of pieces of first credential information, and target credential information that corresponds to the target user information and that is in the plurality of pieces of second credential information.

15. A credential verification device, comprising:
a receiving unit, configured to receive a service request;
a target verification set obtaining unit, configured to obtain a target verification set from a terminal device, wherein the target verification set comprises target user information and target credential information that correspond to a service; and
a credential verification information providing unit, configured to: perform verification on the target verification set, and provide credential verification information for the terminal device, wherein the credential verification information indicates whether the verification on the target verification set succeeds.

16. An identity information verification device, comprising:
a processor; and
a memory configured to store processor-executable instructions, wherein
the processor is configured to implement the method according to any one of claims 1 to 8 or the method according to claim 9 or 10 when executing the instructions.

17. A non-volatile computer-readable storage medium, wherein the non-volatile computer-readable storage medium stores computer program instructions, and when the computer program instructions are executed by a processor, the steps in the method according to any one of claims 1 to 8 or the steps in the method according to claim 9 or 10 are implemented.

18. A computer program product, wherein the computer program product comprises instructions, and the instructions instruct a server to perform the steps in the method according to any one of claims 1 to 8 or the steps in the method according to claim 9 or 10.
